(19) **Europäisches Patentamt**
**European Patent Office**
**Office européen des brevets**

(11) **EP 4 759 876 A1**

(12) **EUROPEAN PATENT APPLICATION**
published in accordance with Art. 153(4) EPC

(43) Date of publication:
**17.06.2026 Bulletin 2026/25**

(21) Application number: **24851754.2**

(22) Date of filing: **01.08.2024**

(51) International Patent Classification (IPC):
*C08L 27/18* (2006.01)   *C08F 8/20* (2006.01)
*C08F 214/26* (2006.01)   *C08F 216/12* (2006.01)
*C08F 216/14* (2006.01)   *C08L 29/10* (2006.01)

(52) Cooperative Patent Classification (CPC):
C08F 8/20; C08F 214/26; C08F 216/12;
C08F 216/14; C08L 27/18; C08L 29/10

(86) International application number:
**PCT/JP2024/027600**

(87) International publication number:
**WO 2025/033329 (13.02.2025 Gazette 2025/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **08.08.2023   JP 2023129557
19.06.2024   JP 2024099100**

(71) Applicant: **AGC Inc.**
**Chiyoda-ku**
**Tokyo 100-8405 (JP)**

(72) Inventors:
• **SHIBASAKI, Kosuke**
**Tokyo 100-8405 (JP)**
• **TOYODA, Mizuna**
**Tokyo 100-8405 (JP)**
• **TAGUCHI, Daisuke**
**Tokyo 100-8405 (JP)**

(74) Representative: **Müller-Boré & Partner
Patentanwälte PartG mbB
Friedenheimer Brücke 21
80639 München (DE)**

(54) **METHOD FOR PRODUCING FLUORINE-CONTAINING POLYMER, AQUEOUS DISPERSION, PARTICLES, AND COMPOSITION**

(57)   A composition that contains a first perfluoropolymer having a glass transition temperature of 10°C or lower, and a second fluoropolymer that contains tetrafluoroethylene and a constitutional unit ascribed to a compound represented by Formula (1) below, and is different from the first perfluoropolymer, the content of a perfluoro(alkyl vinyl ether)-based constitutional unit, with respect to the total content of all the constitutional units of the first perfluoropolymer and the second fluoropolymer, is 0.05 to 5.0 mol%: $CF_2 = CF - CF_2 - O - Rf...(1)$, in Formula (1), Rf represents a perfluoroalkyl group having 1 to 10 carbon atoms, and optionally having an etheric oxygen atom between carbon atoms in the perfluoroalkyl group.

EP 4 759 876 A1

**Description**

Technical Field

The present invention relates to a method of producing a fluorine-containing polymer, an aqueous dispersion, and a composition.

Background Art

Fluorine-containing polymers such as tetrafluoroethylene-based copolymers have been used in various industrial fields, for their excellence in heat resistance, chemical resistance, flame retardancy, weatherability, and so forth.

Examples of known methods of producing the fluorine-containing polymers include a method which relies upon emulsion polymerization of a fluorine-containing monomer in an aqueous medium, with use of a fluorine-containing emulsifier (see Patent Document 1).

Prior Art Document

Patent Document

Patent Document 1: WO 2007/046377 A

SUMMARY OF INVENTION

Technical Problem

The method of producing a fluorine-containing polymer described in Patent Document 1 uses the aqueous medium, and therefore causes less environmental impact. However, the fluorine-containing emulsifier as an essential component, if remained abundantly in an aqueous dispersion obtained by the polymerization, would be necessarily removed depending on application. In recent years, there has been a trend toward restriction of use of the fluorine-containing emulsifier.

The present disclosure has been made in view of such circumstances, in which a problem to be solved by an embodiment of the present invention relates to provide a composition that contains a fluorine-containing polymer excellent in heat resistance, without an essential need for the fluorine-containing emulsifier.

Another problem to be solved by an embodiment of the present invention relates to provide a method of producing a fluorine-containing polymer, capable of producing the fluorine-containing polymer excellent in heat resistance, without an essential need for the fluorine-containing emulsifier.

Still another problem to be solved by an embodiment of the present invention relates to provide an aqueous dispersion that contains a fluorine-containing polymer excellent in heat resistance.

Yet another problem to be solved by an embodiment of the present invention relates to provide a particle that contains a fluorine-containing polymer excellent in heat resistance. Solution to Problem

The present disclosure includes the following aspects.

[1] A composition that includes:

a first perfluoropolymer having a glass transition temperature of 10°C or lower; and
a second fluoropolymer that contains tetrafluoroethylene and a constitutional unit ascribed to a compound represented by Formula (1) below, and that is different from the first perfluoropolymer,
a content of a perfluoro(alkyl vinyl ether)-based constitutional unit, with respect to a total content of all constitutional units of the first perfluoropolymer and the second fluoropolymer, is from 0.05 to 5.0 mol%:

$$CF_2 = CF - CF_2 - O - Rf... \qquad (1),$$

wherein, in Formula (1), Rf represents a perfluoroalkyl group having from 1 to 10 carbon atoms, and optionally having an etheric oxygen atom between carbon atoms in the perfluoroalkyl group.

[2] The composition according to [1], wherein neither the first perfluoropolymer nor the second fluoropolymer contains any functional group, or the total number of functional groups per $10^6$ carbon atoms in main chains of the first perfluoropolymer and the second fluoropolymer is smaller than 100.

[3] The composition according to [1] or [2], wherein the first perfluoropolymer contains a tetrafluoroethylene-based constitutional unit, and a perfluoro(alkyl vinyl ether)-based constitutional unit.

[4] The composition according to [3], wherein, in the first perfluoropolymer, the perfluoro(alkyl vinyl ether)-based constitutional unit accounts for from 20 to 70 mol% of a total of the tetrafluoroethylene-based constitutional unit and the perfluoro(alkyl vinyl ether)-based constitutional unit.

[5] A method of producing a fluorine-containing polymer, the method includes: preparing an aqueous dispersion A that contains a first perfluoropolymer having a glass transition temperature of 10°C or lower, and an aqueous medium; and

producing a second fluoropolymer different from the first perfluoropolymer, by polymerizing, in the aqueous dispersion A, a monomer that contains tetrafluoroethylene and a compound represented by Formula (1) below, before starting the polymerization of the monomer, a content of the first perfluoropolymer is from 0.01 to 4.0 mass% with respect to a total mass of the aqueous dispersion A, and

before starting the polymerization of the monomer, the aqueous dispersion A is free of a fluorine-containing emulsifier, or a content of the fluorine-containing emulsifier is 100 ppm by mass or less, with respect to the total mass of the aqueous dispersion A:

$$CF_2 = CF - CF_2 - O - Rf... \qquad (1),$$

wherein, in Formula (1), Rf represents a perfluoroalkyl group having from 1 to 10 carbon atoms, and optionally having an etheric oxygen atom between carbon atoms in the perfluoroalkyl group.

[6] The method of producing a fluorine-containing polymer according to [5], wherein a usage amount of the monomer is from 1 to 50 parts by mass, per 100 parts by mass of a usage amount of the aqueous medium.

[7] The method of producing a fluorine-containing polymer according to [5] or [6], wherein:

the step of preparing the aqueous dispersion A is a step of preparing the aqueous dispersion A, which contains a particle of the first perfluoropolymer, and the aqueous medium;

wherein the step of producing the second fluoropolymer is a step of producing the second fluoropolymer different from the first perfluoropolymer, by polymerizing the monomer, thereby producing a particle that contains the first perfluoropolymer and the second fluoropolymer; and

a ratio of an average particle size of the particle that contains the first perfluoropolymer and the second fluoropolymer, with respect to an average particle size of the particle of the first perfluoropolymer, is 2 or larger.

[8] The method of producing a fluorine-containing polymer according to [5] or [6], wherein the aqueous dispersion A has a viscosity of 2.0 mPa·s or smaller.

[9] The method of producing a fluorine-containing polymer according to any one of [5] to [8], wherein the aqueous dispersion A has a thixotropic ratio of from 0.9 to 1.2.

[10] The method of producing a fluorine-containing polymer according to any one of [5] to [9], wherein the monomer is polymerized in the presence of a polymerization initiator.

[11] The method of producing a fluorine-containing polymer according to any one of [5] to [10], further including subjecting the first perfluoropolymer and the second fluoropolymer to a fluorination treatment.

[12] An aqueous dispersion that includes an aqueous medium and a melt-moldable particle,

the particle has an average particle size of 1 $\mu$m or smaller;

the particle contains one or more kinds of fluorine-containing polymer;

the fluorine-containing polymer contains a tetrafluoroethylene-based unit, a perfluoro(alkyl vinyl ether)-based constitutional unit, and a constitutional unit ascribed to a compound represented by Formula (1) below;

a content of the perfluoro(alkyl vinyl ether)-based constitutional unit is from 0.05 to 5.0 mol%, with respect to all constitutional units of the fluorine-containing polymer;

a content of the particle is from 1 to 50 mass% with respect to a total mass of the aqueous dispersion; and

the aqueous dispersion is free of a fluorine-containing emulsifier, or a content of the fluorine-containing emulsifier is 100 ppm by mass or less, with respect to a content of the fluorine-containing polymer:

$$CF_2 = CF - CF_2 - O - Rf... \qquad (1),$$

wherein, in Formula (1), Rf represents a perfluoroalkyl group having from 1 to 10 carbon atoms, and optionally having an etheric oxygen atom between carbon atoms in the perfluoroalkyl group.

[13] The aqueous dispersion according to [12], wherein a viscosity is from 0.8 to 2.0 mPa·s.

[14] A melt-moldable particle,

the particle has an average particle size of 1 $\mu$m or smaller;

the particle contains one or more kinds of fluorine-containing polymer;

the fluorine-containing polymer contains a tetrafluoroethylene-based constitutional unit, a perfluoro(alkyl vinyl ether)-based constitutional unit, and a constitutional unit ascribed to a compound represented by Formula (1) below;

a content of the perfluoro(alkyl vinyl ether)-based constitutional unit is from 0.05 to 5.0 mol%, with respect to all constitutional units of the fluorine-containing polymer;

the particle is free of a fluorine-containing emulsifier, or a content of the fluorine-containing emulsifier is 100 ppm by mass or less, with respect to a content of the fluorine-containing polymer; and

with respect to the fluorine-containing polymer, a content of a compound represented by Formula (S1) is from 1 to 10000 ppb by mass, and a content of a compound represented by Formula (S2) is 100 ppb by mass or less:

$$CF_2 = CF - CF_2 - O - Rf... \qquad (1),$$

$$\text{Formula (S1):} \qquad H\text{-}(CF_2)_n\text{-}COOM,$$

and

$$\text{Formula (S2):} \qquad H\text{-}(CF_2)_m\text{-}SO_3M,$$

where in Formula (S1) and Formula (S2), each M independently represents a hydrogen atom, Na, K, or $NH_4$, n represents from 7 to 11, and m represents from 8 to 12. Advantageous Effects of Invention

According to an embodiment of the present invention, there is provided a composition that contains a fluorine-containing polymer excellent in heat resistance, without an essential need for the fluorine-containing emulsifier.

According to an embodiment of the present invention, there is also provided a method of producing a fluorine-containing polymer, capable of producing the fluorine-containing polymer excellent in heat resistance, without an essential need for the fluorine-containing emulsifier.

According to an embodiment of the present invention, there is also provided an aqueous dispersion that contains a fluorine-containing polymer excellent in heat resistance.

According to an embodiment of the present invention, there is also provided a particle that contains a fluorine-containing polymer excellent in heat resistance.

DESCRIPTION OF EMBODIMENTS

In the present disclosure, each numerical range indicated with use of "to" includes numerical values placed before and after "to", as a minimum value and a maximum value, respectively.

With respect to the numerical ranges described stepwise in the present disclosure, the upper limit value or the lower limit value described in one numerical range may be replaced with the upper limit value or the lower limit value of another numerical range described stepwise. With respect to the numerical ranges described in the present specification, the upper limit value or the lower limit value of such numerical range may be replaced with values described in Examples.

In the present disclosure, and in cases where there are a plurality of substances that correspond to each component in the composition, the amount of each component in the composition is defined to mean the total amount of such plurality of substances present in the composition, unless otherwise specified.

In the present disclosure, a combination of two or more preferred aspects represents a more preferred aspect.

In the present disclosure, the term "step" encompasses not only an independent step, but also a step that cannot be clearly distinguished from any other step, as long as the intended purpose of the step is achieved.

[Composition]

The composition of the present disclosure contains a first perfluoropolymer having a glass transition temperature of 10°C or lower; and a second fluoropolymer that contains a constitutional unit (also referred to as "TFE unit", hereinafter) ascribed to tetrafluoroethylene (also referred to as "TFE", hereinafter), and a constitutional unit (also referred to as "compound (1) unit", hereinafter) ascribed to a compound represented by Formula (1) below (also referred to as "compound (1)", hereinafter), and is different from the first perfluoropolymer, and the content of a constitutive unit (also referred to as "PAVE unit", hereinafter) ascribed to perfluoro(alkyl vinyl ether) (also referred to as "PAVE", hereinafter), with respect to the total content of all the constitutional units of the first perfluoropolymer and the second fluoropolymer, is from 0.05 to 5.0 mol%:

$$CF_2 = CF - CF_2 - O - Rf... \quad (1),$$

where in Formula (1), Rf represents a perfluoroalkyl group having from 1 to 10 carbon atoms, and optionally having an etheric oxygen atom between carbon atoms in the perfluoroalkyl group.

The composition of the present disclosure contains the first perfluoropolymer and the second fluoropolymer, in which the content of the PAVE unit, with respect to the total content of all the constitutional units of the first perfluoropolymer and the second fluoropolymer, is from 0.05 to 5.0 mol%, thus proving excellent heat resistance.

In contrast, Patent Document 1 gives no description focused on a composition that contains two or more kinds of fluorine-containing copolymer.

(First Perfluoropolymer)

The first perfluoropolymer is a perfluoropolymer having a glass transition temperature of 10°C or lower.

In the present disclosure, the "perfluoropolymer" means a polymer in which all of hydrogen atoms, bonded to carbon atoms in the constitutional unit of the polymer, are substituted with fluorine atoms. The "fluoropolymer" means a polymer in which a part of, or all of hydrogen atoms, bonded to carbon atoms in the constitutional unit of the polymer, are substituted with fluorine atoms.

The glass transition temperature (also referred to as "Tg", hereinafter) of the first perfluoropolymer is 10°C or lower.

Tg of the first perfluoropolymer is preferably 5°C or lower, more preferably 3°C or lower, and still more preferably 0°C or lower, from the viewpoint of efficiently adsorbing a specific monomer described later.

Tg of the first perfluoropolymer is preferably -50°C or higher, more preferably -45°C or higher, and still more preferably -40°C or higher, from the viewpoint of thermal stability after being molded.

Tg of the first perfluoropolymer is measured by differential scanning calorimetry (DSC).

For example, Tg is measured with use of NEXTA DSC600 from Hitachi High-Tech Corporation. More specifically, 5 mg of a sample to be measured is weighed on an aluminum sample pan, and the sample is heated to 100°C at a heating rate of 10°C/min, in a nitrogen atmosphere. The sample is then cooled down to -60°C at a rate of 10°C/min. Upon reaching a predetermined temperature, the sample is heated again up to 100°C at 10°C/min. Tg is estimated from an inflection point found in the second temperature elevation.

Examples of the method of controlling Tg of the first perfluoropolymer within the aforementioned ranges include a method by which the type and usage of the monomer used for producing the first perfluoropolymer are adjusted.

The first perfluoropolymer preferably contains the TFE unit and the PAVE unit, from the viewpoint of easier adjustment of Tg within the aforementioned ranges, and more excellent heat resistance.

PAVE is preferably a monomer represented by Formula (2), from the viewpoint of excellence in polymerization reactivity during production of the first perfluoropolymer.

$$CF_2 = CF - O - R^{f1}... \quad (2)$$

In Formula (2), $R^{f1}$ represents a perfluoroalkyl group having from 1 to 10 carbon atoms. The number of carbon atoms in $R^{f1}$ is preferably from 1 to 8, more preferably from 1 to 6, still more preferably from 1 to 5, and particularly preferably from 1 to 3, from the viewpoint of more excellent polymerization reactivity.

The perfluoroalkyl group may be linear or branched.

Specific examples of PAVE include perfluoro(methyl vinyl ether) (also referred to as "PMVE", hereinafter), perfluoro(ethyl vinyl ether) (also referred to as "PEVE", hereinafter), and perfluoro(propyl vinyl ether) (also referred to as "PPVE", hereinafter).

Among them, PAVE is preferably PMVE or PPVE, and more preferably PMVE, from the viewpoint that the second fluoropolymer can be produced more efficiently.

In the first perfluoropolymer if containing the TFE unit and the PAVE unit, the content of the PAVE unit with respect to the total content of the TFE unit and the PAVE unit in the first perfluoropolymer is preferably from 20.0 to 70.0 mol%, more preferably from 25.0 to 65.0 mol%, and still more preferably from 30.0 to 60.0 mol%, from the viewpoint of easily adjusting Tg within the aforementioned ranges.

The first perfluoropolymer may contain a constitutional unit ascribed to any other monomer other than TFE and PAVE. From the viewpoint of more efficiently producing the second fluoropolymer, the content of the constitutional unit ascribed to such other monomer is preferably 20.0 mol% or less, and is more preferably 15.0 mol% or less, with respect to all the constitutional units of the first perfluoropolymer. It is further preferred that the first perfluoropolymer is substantially free of the constitutional unit ascribed to such other monomer.

The phrase "substantially free of the constitutional unit ascribed to such other monomer" means that the content of the unit ascribed to such other monomer is 0.01 mol% or less, with respect to all the constitutional units of the first perfluoropolymer. The content is more preferably 0.00 mol%.

In a case where the constitutional unit ascribed to other monomer is contained, such other monomer is preferably hexafluoropropylene.

(Second Fluoropolymer)

The second fluoropolymer is a fluoropolymer different from the first perfluoropolymer.

The second fluoropolymer contains the TFE unit and the compound (1) unit:

$$CF_2 = CF - CF_2 - O - Rf... \qquad (1),$$

where in Formula (1), Rf represents a perfluoroalkyl group having from 1 to 10 carbon atoms, and optionally having an etheric oxygen atom between carbon atoms in the perfluoroalkyl group.

The number of carbon atoms in Rf is preferably from 2 to 8, and more preferably from 3 to 8.

Rf may be linear, branched, or may contain a ring structure.

Examples of Rf include $-(CF_2)_mCF_3$ and $-(CF_2)_{r1}-O-(CF_2)_{r2}CF_3$.

m is an integer of from 0 to 9.

r1 is an integer of from 1 to 9, r2 is an integer of from 0 to 8, and r1 + r2 represents an integer of from 1 to 9.

Among them, m is preferably an integer of from 1 to 7, and more preferably an integer of from 1 to 5.

r1 is preferably an integer of from 1 to 6, and more preferably an integer of from 1 to 4.

r2 is preferably an integer of from 1 to 6, and more preferably an integer of from 1 to 4.

In particular, the compound (1) is preferably $CF_2 = CF - CF_2 - OCF_2CF_2CF_3$.

In the second fluoropolymer, the content of the compound (1) unit, with respect to the total content of the TFE unit and the compound (1) unit, is preferably from 0.2 to 7.0 mol%, more preferably from 0.5 to 6.0 mol%, and still more preferably from 1.0 to 5.0 mol%, from the viewpoint of heat resistance.

The second fluoropolymer may contain any constitutional unit ascribed to other monomer other than TFE and the compound (1), wherein the constitutional unit ascribed to other monomer preferably accounts for 10.0 mol% or less, and is more preferably 5.0 mol% or less, with respect to all the constitutional units of the second fluoropolymer, from the viewpoint of heat resistance. It is further preferred that the second fluoropolymer is substantially free of the constitutional unit ascribed to such other monomer.

The phrase "substantially free of the constitutional unit ascribed to other monomer" means that the content of the unit ascribed to other monomer is 0.01 mol% or less, with respect to all the constitutional units of the second fluoropolymer. The content is more preferably 0.00 mol%.

In a case where the constitutional unit ascribed to other monomer is contained, examples of such other monomer include fluoroolefins (however exclusive of TFE and the compound (1)) such as hexafluoropropylene (HFP) and PAVE; and acid anhydrides such as itaconic anhydride, citraconic anhydride, and 5-norbornene-2,3-dicarboxylic anhydride.

In the composition of the present disclosure, the content of the PAVE unit, with respect to the total content of all the constitutional units of the first perfluoropolymer and the second fluoropolymer, is from 0.05 to 5.0 mol%, more preferably from 0.1 to 4.0 mol%, and still more preferably from 0.1 to 3.0 mol%. With the content of the PAVE unit adjusted to from 0.05 to 5.0 mol%, the composition excels in heat resistance.

The content of the first perfluoropolymer, in the solid content of the composition of the present disclosure, is preferably 0.01 mass% or more, and more preferably 0.1 mass% or more.

The content of the first perfluoropolymer in the composition of the present disclosure is preferably 10 mass% or less, and more preferably 5 mass% or less.

The content of the second fluoropolymer, in the solid content of the composition of the present disclosure, is preferably 90 mass% or more, and more preferably 95 mass% or more.

The content of the second fluoropolymer, in the composition of the present disclosure, is preferably 99.99 mass% or less, and more preferably 99.9 mass% or less.

In the composition of the present disclosure, proportion of the content of the first perfluoropolymer, with respect to the total content of the first perfluoropolymer and the second fluoropolymer, is preferably 0.2 mass% or larger, and more preferably 0.5 mass% or larger. Proportion of the content of the first perfluoropolymer, with respect to the total content of the first perfluoropolymer and the second fluoropolymer, is preferably 10 mass% or smaller, and more preferably 5 mass% or smaller, from the viewpoint of heat resistance.

From the viewpoint of more excellent heat resistance, neither the first perfluoropolymer nor the second fluoropolymer preferably contains any functional group, or the total number of the functional groups per $10^6$ carbon atoms in the main chains of the first perfluoropolymer and the second fluoropolymer, is preferably smaller than 100, more preferably 50 or smaller, and still more preferably 30 or smaller.

Types of the functional groups and the number of the functional groups may be identified and measured by infrared spectroscopic analysis.

The number of the functional groups may be measured by the method below.

The first perfluoropolymer and the second fluoropolymer are press-molded at 340°C to prepare a film of 200 μm thick. The film is analyzed with a Fourier transform infrared spectrophotometer under scanning repeated 16 times, to obtain an infrared absorption spectrum.

The first perfluoropolymer and the second fluoropolymer are subjected to fluorination treatment in a fluorination step described later for a long time, to obtain fully fluorinated first perfluoropolymer and second fluoropolymer. The first perfluoropolymer and the second fluoropolymer, thus fully fluorinated, are then press-molded at 340°C, to prepare a fully fluorinated film of 200 μm thick. The fully fluorinated film is analyzed with a Fourier transform infrared spectrophotometer under scanning repeated 16 times, to obtain a base spectrum.

With reference to absorption peaks attributable to specific functional groups appeared in a differential spectrum between the obtained infrared absorption spectrum and the base spectrum, the number N of functional groups per $10^6$ carbon atoms in the main chains is estimated, according to Equation (A) below:

$$N = I \times K/t...(A),$$

I: absorbance,
K: correction factor, and
t: film thickness (mm).

Table 1 shows absorption frequency, molar extinction coefficient, and correction factor for specific functional groups including $-CF_2H$. The molar extinction coefficient of the specific functional groups is estimated from FT-IR measurement data of low-molecular-weight model compounds.

[Table 1]

| Functional group | Absorption frequency ($cm^{-1}$) | Molar extinction coefficient (l/cm/mol) | Correction factor | Model compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| $-COOCH_3$ | 1795 | 680 | 342 | $C_7F_{15}COOCH_3$ |
| $-CONH_2$ | 3436 | 506 | 460 | $C_7H_{15}CONH_2$ |
| $-CH_2OH$, -OH | 3648 | 104 | 2236 | $C_7H_{15}CH_2OH$ |
| $-CF_2H$ | 3020 | 8.8 | 26485 | $H(CF_2CF_2)_3CH_2OH$ |
| $-CF = CF_2$ | 1795 | 635 | 366 | $CF_2 = CF_2$ |

In the copolymer, the absorption frequencies of $-CH_2CF_2H$, $-CH_2COF$, $-CH_2COOH$, - $CH_2COOCH_3$, and $-CH_2CONH_2$ will be several tens of kaysers ($cm^{-1}$) lower than the absorption frequencies of $-CF_2H$, -COF, -COOH (free and bonded), $-COOCH_3$, and $-CONH_2$ shown in the table.

For example, the number of -COF is given by a sum of the number of functional groups estimated from an absorption peak at an absorption frequency of 1883 $cm^{-1}$ attributable to - $CF_2COF$, and the number of functional groups estimated from an absorption peak at an absorption frequency of 1840 $cm^{-1}$ attributable to $-CH_2COF$.

Each functional group in the first perfluoropolymer and the second fluoropolymer is a functional group present at a main chain terminal or a side chain terminal of each polymer, and a functional group present in the main chain or the side chain.

Examples of the functional group include $-CF = CF_2$, $-CF_2H$, -COF, -COOH, - $COOCH_3$, $-CONH_2$, and $-CH_2OH$.

The number of the functional groups may be the total number of $-CF = CF_2$, $-CF_2H$, - COF, -COOH, $-COOCH_3$, $-CONH_2$, and $-CH_2OH$.

The functional group is introduced, for example, with use of a chain transfer agent or a polymerization initiator used in production of the first perfluoropolymer and the second fluoropolymer. Alternatively, the functional group is introduced at the side chain terminal, by polymerizing the monomer having the functional group.

Fluorination of the polymer having the functional group can adjust the total number of functional groups, per $10^6$ carbon atoms in the main chains of the first perfluoropolymer and the second fluoropolymer, to smaller than 100. That is, the composition of the present disclosure is preferably a composition that contains a polymer subjected to the fluorination treatment.

The composition of the present disclosure may be a particle, a powder composition that contains a plurality of particles, or a liquid composition. The composition of the present disclosure, given as the liquid composition, may be a dispersion having the particle dispersed in water or in an organic solvent.

The composition of the present disclosure, given as the particle, is preferably a particle (also referred to as the "present particle", hereafter) that contains the first perfluoropolymer and the second fluoropolymer, in which the content of the PAVE unit, with respect to the total content of all the constitutional units of the first perfluoropolymer and the second fluoropolymer, is from 0.1 to 10.0 mol%.

The composition of the present disclosure, given as the powder composition or the liquid composition, preferably contains the present particle.

The average particle size of the present particle is preferably 1 $\mu$m or smaller, more preferably 700 nm or smaller, and still more preferably 500 nm or smaller. The lower limit value of the average particle size of the present particle is preferably 30 nm, from the viewpoint of aggregability.

The composition of the present disclosure may also be given as a pellet, or a molded article such as film or tube.

In a case where the composition of the present disclosure is given as the particle or the powder composition, the average particle size of the present particle means a value obtained by photographing the present particle under a scanning electron microscope, finding the particle size from five different particles on the obtained SEM image, and then arithmetically averaging the values.

In a case where the composition of the present disclosure is given as the liquid composition, the average particle size of the present particle is estimated by measuring the particle size distribution by laser diffractometry/scatterometry, to obtain a cumulative curve while assuming the total volume of the particle population as 100%. The average particle size is given by a particle size (D50) that corresponds to a point on the cumulative curve, at which the cumulative volume reaches 50%.

In a case where the composition of the present disclosure is given as the dispersion, the viscosity of the dispersion is preferably from 0.8 to 2.0 mPa·s, and more preferably from 1.0 to 1.5 mPa·s, from the viewpoint of ease of handling.

The viscosity of the dispersion is a value measured with a B-type viscometer, at room temperature (25°C) and at a rotation speed of 30 rpm. The viscosity is given by an average value of three measured values from the measurement repeated three times.

It is preferred that the composition of the present disclosure is substantially free of a fluorine-containing emulsifier. Details of the fluorine-containing emulsifier will be given later.

The composition of the present disclosure is free of the fluorine-containing emulsifier, or the content of the fluorine-containing emulsifier is preferably 100 ppm by mass or less, more preferably 10 ppm by mass or less, still more preferably 5 ppm by mass or less, and particularly preferably 1 ppm by mass or less, with respect to the total content of the first perfluoropolymer and the second fluoropolymer.

The content of the fluorine-containing emulsifier, with respect to the total content of the first perfluoropolymer and the second fluoropolymer, may be estimated by a method same as the method of measuring the content of fluorine-containing surfactant by liquid chromatography-mass spectrometry, described in paragraphs [0364] to [0369] of WO 2021/045227 A.

In the composition of the present disclosure, the content of the compound represented by Formula (S1) below, with respect to the total content of the first perfluoropolymer and the second fluoropolymer, is preferably 1 ppb by mass or more, and more preferably 10 ppb by mass or more, with respect to the fluorine-containing polymer, from the viewpoint of workability.

In the composition of the present disclosure, the content of the compound represented by Formula (S1) below, with respect to the total content of the first perfluoropolymer and the second fluoropolymer, is preferably 10000 ppb by mass or less, more preferably 1000 ppb by mass or less, and still more preferably 300 ppb by mass or less, from the viewpoint of suppressing the physical properties of the composition of the present disclosure, including heat resistance, from degrading.

In the composition of the present disclosure, the content of the compound represented by Formula (S2) below, with respect to the total content of the first perfluoropolymer and the second fluoropolymer, is preferably 0.1 ppb by mass or more, and more preferably 1 ppb by mass or more, with respect to the fluorine-containing polymer, from the viewpoint of workability.

In the composition of the present disclosure, the content of the compound represented by Formula (S2) below, with respect to the total content of the first perfluoropolymer and the second fluoropolymer, is preferably 50 ppb by mass or less, and more preferably 25 ppb by mass or less, from the viewpoint of suppressing the physical properties of the composition of the present disclosure, including heat resistance, from degrading:

Formula (S1): $H-(CF_2)_n-COOM,$

and

Formula (S2): $H-(CF_2)_m-SO_3M.$

In Formula (S1) and Formula (S2), each M independently represents a hydrogen atom, Na, K, or $NH_4$, n represents from 7 to 11, and m represents from 8 to 12.

The content of the compound represented by Formula (S1), with respect to the total content of the first perfluoropolymer and the second fluoropolymer, may be calculated by a method with use of an aqueous dispersion, from among the measurement methods with use of a liquid chromatograph-mass spectrometer described in paragraphs [0710] to [0720] of WO 2018/181904 A.

The content of the compound represented by Formula (S2), with respect to the total content of the first perfluoropolymer and the second fluoropolymer, may be calculated by a method with use of an aqueous dispersion, from among the measurement methods with use of a liquid chromatograph-mass spectrometer described in paragraphs [0721] to [0732] of WO 2018/181904 A.

The composition of the present disclosure may be subjected to a fluorination treatment, thereby adjusting the content of the compound represented by Formula (S1). Examples of the method of the fluorination treatment include the methods described later.

Fluorination of the composition of the present disclosure can reduce the content of the compound represented by Formula (S1), in the particle of the present disclosure.

[Method of Producing Fluorine-Containing Polymer]

The method of producing a fluorine-containing polymer of the present disclosure includes: preparing an aqueous dispersion A that contains the first perfluoropolymer having a Tg of 10°C or lower, and the aqueous medium; and producing the second fluoropolymer different from the first perfluoropolymer, by polymerizing, in the aqueous dispersion A, a monomer (also referred to as "specific monomer", hereinafter) that contains TFE and the compound (1). Before starting the polymerization of the specific monomer, the content of the first perfluoropolymer is from 0.01 to 4.0 mass% with respect to the total mass of the aqueous dispersion A, and before starting the polymerization of the specific monomer, the aqueous dispersion A is free of a fluorine-containing emulsifier, or the content of the fluorine-containing emulsifier is 100 ppm by mass or less, with respect to the total mass of the aqueous dispersion A.

In the present disclosure, "before the start of polymerization of the specific monomer" means immediately before a polymerization start point of the specific monomer. Now, examples of the "polymerization start point" include a point in time at which the specific monomer and the polymerization initiator are allowed to coexist in a reactor, after the inner temperature of the reactor is elevated to the polymerization temperature or above, and, a point in time at which the inner temperature of the reactor is elevated to the polymerization temperature or above, after the specific monomer and the polymerization initiator are allowed to coexist in the reactor.

According to the method of producing a fluorine-containing polymer of the present disclosure, the second fluoropolymer may be produced efficiently, by polymerizing the monomer that contains TFE and HFP, in the aqueous dispersion A that contains the first perfluoropolymer having a Tg of 10°C or lower, and the aqueous medium, even if the content of the fluorine-containing emulsifier is 100 ppm by mass or less with respect to the total mass of the aqueous dispersion A.

The method of producing a fluorine-containing polymer of the present disclosure preferably includes a step of preparing the aqueous dispersion A, and a step of producing a second fluoropolymer different from the first perfluoropolymer, in this order.

<Aqueous Dispersion A Preparation Step>

The method of producing a fluorine-containing polymer of the present disclosure includes a step (also referred to as "aqueous dispersion A preparation step", hereinafter) of preparing the aqueous dispersion A that contains the first perfluoropolymer having a Tg of 10°C or lower, and the aqueous medium.

(First Perfluoropolymer)

Details of the first perfluoropolymer contained in the aqueous dispersion A, prepared in the aqueous dispersion A preparation step, and having a Tg of 10°C or lower, have been described above.

The first perfluoropolymer is preferably dispersed in the form of particle, in an aqueous medium.

The average particle size of the first perfluoropolymer is preferably from 1 to 200 nm, more preferably from 10 to 150 nm, and still more preferably from 30 to 120 nm, from the viewpoint that the second fluoropolymer can be produced more efficiently.

The average particle size of the first perfluoropolymer is estimated by measuring the particle size distribution by laser diffractometry/scatterometry, to obtain a cumulative curve while assuming the total volume of the particle population as 100%. The average particle size is given by a particle size (D50) that corresponds to a point on the cumulative curve, at which the cumulative volume reaches 50%.

The first perfluoropolymer may be produced, for example, by polymerizing the monomer (preferably, a mixture of monomers that contain TFE and the compound (1)) in a polymerization solvent, in the presence of a polymerization initiator. Accordingly, a dispersion of the first perfluoropolymer dispersed in a particle form in the polymerization solvent is obtainable.

In a case where the monomer is polymerized to obtain the first perfluoropolymer, pH of a reaction system that contains the monomer and the polymerization solvent, before the start of polymerization, is preferably 6.5 or larger, and more preferably 7.0 or larger, from the viewpoint of efficiently allowing the polymerization to proceed. The pH of the reaction system is preferably 10.5 or smaller, and more preferably 10 or smaller, from the viewpoint of improving the stability of the first perfluoropolymer.

The pH of the reaction system is adjustable with use of a pH adjuster. Examples of the pH adjuster include a pH adjuster which may be contained in the aqueous dispersion A described later, and ammonia. Ammonia is preferred.

The dispersion of the first perfluoropolymer thus obtained may be used, without modification, as the aqueous dispersion A. Alternatively, any other aqueous medium may be added to the dispersion of the first perfluoropolymer, for use as the aqueous dispersion. Alternatively, the first perfluoropolymer may be dispersed in another aqueous medium by solvent replacement, for use as the aqueous dispersion A.

The polymerization initiator used for producing the first perfluoropolymer is preferably a water-soluble polymerization initiator, which is more preferably persulfate such as ammonium persulfate, sodium persulfate, or potassium persulfate; peroxide such as disuccinic acid peroxide; or azo compound such as azobisisobutyramidine dihydrochloride, still more preferably persulfate, and particularly preferably ammonium persulfate.

Examples of the polymerization solvent include water, and mixed solvent of water and water-soluble organic solvent. Specific examples of the water-soluble organic solvent include tert-butanol, propylene glycol, dipropylene glycol, dipropylene glycol monomethyl ether, and tripropylene glycol.

The method of producing the first perfluoropolymer may have a heating step, subsequent to obtainment of the dispersion having the first perfluoropolymer dispersed therein, for heating the dispersion.

(Aqueous Medium)

The aqueous medium contained in the aqueous dispersion A, prepared in the aqueous dispersion A preparation step, may be the polymerization solvent having been used for the production of the first perfluoropolymer.

Specific examples of the aqueous medium contained in the aqueous dispersion A are the same as the specific examples of the polymerization solvent used for producing the first perfluoropolymer.

Before the start of polymerization of the monomers used for the polymerization of the second perfluoropolymer, the content of the aqueous medium is preferably from 60.0 to 99.9 mass%, more preferably from 96 to 99.9 mass%, and still more preferably from 98.0 to 99.9 mass%, with respect to the total mass of the aqueous dispersion A.

(Other Components)

The aqueous dispersion A may contain any other component, other than the first perfluoropolymer and the aqueous medium.

Specific examples of such other component which may be contained in the aqueous dispersion A include chain transfer agent, emulsifier other than fluorine-containing emulsifier, pH adjuster, and wax.

In the present disclosure, the emulsifier is a compound having a hydrophilic moiety and a hydrophobic moiety.

Examples of the emulsifier include hydrocarbon-containing surfactant, fluorine-containing emulsifier, and polymer emulsifier.

Neither the first perfluoropolymer nor the second fluoropolymer corresponds to the emulsifier.

The emulsifier may be either ionic or nonionic.

The hydrocarbon-containing surfactant is a surfactant that contains hydrocarbon group. More specifically, the hydrocarbon-containing surfactant may have substitution with halogen atom such as fluorine atom or chlorine atom, as long as the hydrocarbon group is contained. In the hydrocarbon-containing surfactant, hydrogen atom preferably accounts for 75% or more of atoms or monovalent groups bonded to the carbon atoms of the hydrocarbon group, the percentage is more preferably 85% or larger, and still more preferably 95% or larger.

Examples of the hydrocarbon-containing surfactant include hydrocarbon surfactant and siloxane surfactant. The hydrocarbon surfactant is understood to contain no silicon atom, and have hydrogen atoms for all the atoms or monovalent groups bound to the carbon atoms of the hydrocarbon group, and therefore means a surfactant free of halogen atom such as chlorine atom or fluorine atom. The siloxane surfactant means a hydrocarbon-containing surfactant having a hydrophobic group that contains a siloxane skeleton having a large number of siloxane units.

Examples of the hydrocarbon surfactant include anionic hydrocarbon surfactant.

The anionic hydrocarbon surfactant means a hydrocarbon surfactant having a negatively charged hydrophilic moiety such as carboxylic acid group, sulfonic acid group, sulfuric acid group, phosphonic acid group, or phosphoric acid group; and a hydrophobic moiety given by hydrocarbon moiety such as alkyl group.

An exemplary anionic hydrocarbon surfactant may be a highly branched C10 tertiary carboxylic acid, marketed as Versatic (registered trademark) 10 from Resolution Performance Products. Other examples of the anionic hydrocarbon surfactant include sodium linear alkyl polyether sulfonates, marketed as Avanel (registered trademark) S series from BASF.

Examples of the anionic hydrocarbon surfactant also include sodium dodecyl sulfate.

Other examples of the anionic hydrocarbon surfactant include sulfosuccinate surfactant Lankropol (registered trademark) K8300 available from Akzo Nobel Surface Chemistry LLC.

Examples of the hydrocarbon surfactant also include nonionic hydrocarbon surfactant.

The nonionic hydrocarbon surfactant has no charged group, but has a hydrophobic moiety which is often given as a long chain hydrocarbon. Examples of the hydrophilic moiety of the nonionic hydrocarbon surfactant include water-soluble functional group such as polyethylene oxide chain obtainable by polymerizing ethylene oxide. Examples of the nonionic hydrocarbon surfactant include block copolymers having various types of polyalkylene oxide block, such as polyethylene oxide or polypropylene oxide.

Examples of the nonionic hydrocarbon surfactant include surfactants described in paragraphs [0043] to [0052] of JP 2016-537499 A.

Examples of the siloxane surfactant include surfactants described in U.S. Patent Nos. 6,841,616 (Wille et al.) and 7,977,438 (Brothers et al.).

Examples of the fluorine-containing emulsifier include anionic fluorine-containing surfactant.

Examples of the anionic fluorine-containing surfactant include fluorine-containing surfactant whose moiety excluding the anionic group has 20 or less carbon atoms in total, and, fluorine-containing surfactant whose anionic moiety has a molecular weight of 800 or smaller. Note the aforementioned "anionic moiety" means a moiety of the fluorine-containing surfactant, excluding cation.

Examples of the polymer emulsifier include water-soluble polymer having hydrophilic group in the side chain. Examples of this sort of polymer emulsifier include polymer that contains a constitutional unit ascribed to a compound having a site which is reactive in polymerization, and a hydrophilic group. The examples also include polymer obtained by posttreatment, such as hydrolysis, of polymer that contains a constitutional unit ascribed to a compound having a group that can serve as a hydrophilic group.

Specific examples of the chain transfer agent include ethyl acetate, methanol, ethanol, t-butyl methyl ether, diethyl ether, n-pentane, cyclohexane, methane, and propane. From the viewpoint of ability of controlling the molecular weight only with a small amount thereof, the chain transfer agent is preferably t-butyl methyl ether or methane, and more preferably t-butyl methyl ether.

Specific examples of the pH adjuster include inorganic salts. Specific examples of the inorganic salts include phosphates such as disodium hydrogen phosphate and sodium dihydrogen phosphate; and carbonates such as sodium hydrogen carbonate and sodium carbonate. More preferred specific examples of the phosphate include disodium hydrogen phosphate dihydrate, and disodium hydrogen phosphate dodecahydrate.

Specific examples of the wax include Parafffin Wax-155, and Parafffin Wax-150 (both from Nippon Seiro Co., Ltd.).

In a case where the aqueous dispersion A contains the chain transfer agent, the content of the chain transfer agent is preferably from 0.1 to 5.0 parts by mass, per 100 parts by mass of the aqueous medium. The usage of the chain transfer agent is preferably from 0.1 to 20.0 parts by mass, more preferably from 0.1 to 15.0 parts by mass, and still more preferably from 0.1 to 10.0 parts by mass, per 100 parts by mass of the usage of the specific monomer described later.

In a case where the aqueous dispersion A contains any emulsifier other than the fluorine-containing emulsifier, the content of the emulsifier other than the fluorine-containing emulsifier is preferably from 0.01 to 5.0 parts by mass, per 100 parts by mass of the aqueous medium.

In a case where the aqueous dispersion A contains the pH adjustor, the content of the pH adjustor is preferably from 0.01 to 3.0 parts by mass, per 100 parts by mass of the aqueous medium.

The pH of the aqueous dispersion A is preferably 1.0 or larger, and more preferably 2.0 or larger, from the viewpoint of enabling stable polymerization of the second fluoropolymer. The pH of the aqueous dispersion A is preferably 11 or smaller, and more preferably 10.5 or smaller, from the viewpoint of enabling stable polymerization of the second fluoropolymer.

In a case where the aqueous dispersion A contains the wax, the content of the wax is preferably from 1 to 10 parts by mass, per 100 parts by mass of the aqueous medium.

The viscosity of the aqueous dispersion A is preferably 2.0 mPa·s or smaller, more preferably 1.9 mPa·s or smaller, and still more preferably 1.7 mPa·s or smaller, from the viewpoint of enabling stable polymerization of the second fluoropolymer. The viscosity of the aqueous dispersion A is preferably 0.85 mPa·s or larger, and more preferably 0.9 mPa·s or larger, from the viewpoint of enabling stable polymerization of e second fluoropolymer.

The thixotropic ratio of the aqueous dispersion A is preferably 0.9 or larger, and more preferably 0.95 or larger, from the viewpoint of enabling stable polymerization of the second fluoropolymer. The thixotropic ratio of the aqueous dispersion A is preferably 1.2 or smaller, and more preferably 1.1 or smaller, from the viewpoint of enabling stable polymerization of the second fluoropolymer.

The viscosity of the aqueous dispersion A is a value measured with a B-type viscometer, at room temperature (25°C) and at a rotation speed of 30 rpm. The viscosity is given by an average value of three measured values from the measurement repeated three times.

The thixotropic ratio of the aqueous dispersion A is given by a value, obtained by dividing the viscosity of the aqueous dispersion A measured under the condition including a rotation speed of 30 rpm, by the viscosity of the aqueous dispersion A measured under the condition including a rotation speed of 60 rpm.

(Second Fluoropolymer Producing Step)

The method of producing a fluorine-containing polymer of the present disclosure includes a step of polymerizing the specific monomer, in the aqueous dispersion A, to produce the second fluoropolymer different from the first perfluoropolymer (also referred to as "second fluoropolymer producing step", hereinafter).

Details of the second fluoropolymer have been described above.

Before the start of polymerization of the specific monomer, the content of the first perfluoropolymer is from 0.01 to 4.0 mass%, preferably from 0.05 to 3.0 mass%, and still more preferably from 0.1 to 2.0 mass%, with respect to the total mass of the aqueous dispersion A. With the content of the first perfluoropolymer adjusted to 0.01 mass% or more, the polymerization stability (productivity) will improve, meanwhile with the content of the first perfluoropolymer adjusted to 4.0 mass% or less, the polymer obtainable by the polymerization (that is, a mixture of the first perfluoropolymer and the second fluoropolymer) will have excellent heat resistance.

Before the start of polymerization of the specific monomer, the aqueous dispersion A is free of the fluorine-containing emulsifier, or the content of the fluorine-containing emulsifier is 100 ppm by mass or less, preferably 50 ppm by mass or less, more preferably 25 ppm by mass or less, and still more preferably 5 ppm by mass or less, with respect to the total mass of the aqueous dispersion A. The lower limit is exemplified by 0 ppm by mass.

According to the method of producing a fluorine-containing polymer of the present disclosure, the second fluoropolymer may be produced efficiently, even if the content of the fluorine-containing emulsifier is 100 ppm by mass or less.

Before the start of polymerization of the specific monomer, the concentration of fluoride ion is preferably 100 ppm by mass or lower, and preferably 50 ppm by mass or lower, with respect to the total mass of the aqueous dispersion A, from the viewpoint of polymerization stability. The lower limit is exemplified by 0 ppm by mass.

An exemplary method of adjusting the concentration of fluoride ion to the aforementioned value may be a method by which the sulfate ion is removed with use of an anion exchange resin, during production of the first perfluoropolymer.

The fluoride ion herein may be produced by a reaction of the polymerization initiator (ammonium persulfate, for example) with the monomer used for producing the first fluorine-containing polymer, and may be contained in the aqueous dispersion.

Before the start of polymerization of the specific monomer, the concentration of sulfate ion is preferably 10 ppm by mass or lower, and preferably 5 ppm by mass or lower, with respect to the total mass of the aqueous medium in the aqueous dispersion, from the viewpoint of suppressing the second fluorine-containing polymer from being colored. The lower limit is exemplified by 0 ppm by mass.

An exemplary method of adjusting the concentration of the sulfate ion to the aforementioned value relates to a method by which the sulfate ion is removed with use of an anion exchange resin, during production of the first perfluoropolymer.

The sulfate ion herein is derived, for example, from the polymerization initiator (ammonium persulfate, in particular) used during production of the first perfluoropolymer, and may be contained in the aqueous dispersion that contains the first perfluoropolymer. With the content of the sulfate ion adjusted to 10 ppm by mass or less (particularly 5 ppm by mass or less), any terminal group having poor heat resistance will be suppressed from being formed in the second fluoropolymer, and this supposedly suppresses the second fluoropolymer from being colored.

Before the start of polymerization of the specific monomer, the concentration of ammonium ion is preferably 20 ppm by mass or lower, and preferably 10 ppm by mass or lower, with respect to the total mass of the aqueous medium in the aqueous dispersion, from the viewpoint of suppressing the second fluoropolymer from causing aggregation. The lower limit is exemplified by 0 ppm by mass.

An exemplary method of adjusting the concentration of the ammonium ion to the aforementioned value relates to a method by which the ammonium ion is removed with use of a cation exchange resin, during production of the first perfluoropolymer.

The ammonium ion herein is derived, for example, from the initiator (ammonium persulfate, in particular) used during production of the first perfluoropolymer, and may be contained in the aqueous dispersion that contains the first perfluoropolymer. With the content of the ammonium ion adjusted to 20 ppm by mass or less, the ionic strength in the aqueous medium will decrease, and this supposedly improves the production efficiency of the second fluoropolymer.

(Specific Monomer)

The specific monomer contains TFE and the compound (1).

Preferred aspects of the compound (1) have been described above.

The usage of compound (1), with respect to the total usage of TFE and the compound (1), is preferably from 0.2 to 7.0 mol%, more preferably from 0.5 to 6.0 mol%, and still more preferably from 1.0 to 5.0 mol%, from the viewpoint of heat resistance.

The specific monomer may contain any other monomer other than TFE and the compound (1). From the viewpoint of heat resistance, the usage of such other monomer is preferably 10.0 mol% or less, and more preferably 5.0 mol% or less, with respect to the total usage of the specific monomer. It is preferred that the specific monomer is substantially free of such other monomer.

The phrase "substantially free of such other monomer" means that the usage of such other monomer is 0.01 mol% or less, with respect to the total usage of the specific monomer. The usage may also be 0.00 mol%.

Examples of such other monomer include fluoroolefins (exclusive of TFE and compound (1)) such as HFP and PAVE; and acid anhydrides such as itaconic anhydride, citraconic anhydride, and 5-norbornene-2,3-dicarboxylic anhydride.

The usage of the specific monomer is preferably from 1 to 50 parts by mass, more preferably from 1 to 40 parts by mass, and still more preferably from 1 to 30 parts by mass, per 100 parts by mass of the usage of the aqueous medium contained in the aqueous dispersion A.

(Polymerization Initiator)

In the second fluoropolymer production step, the specific monomer is preferably polymerized in the presence of a polymerization initiator.

Preferred examples of the polymerization initiator include oil-soluble radical initiator, water-soluble radical initiator, and water-soluble redox catalyst.

Examples of the oil-soluble radical initiator include oil-soluble organic peroxides such as tert-butyl peroxypivalate (also referred to as "PBPV", hereinafter), and diisopropyl peroxydicarbonate (also referred to as "IPP", hereinafter).

Examples of the water-soluble radical initiator include persulfates such as ammonium persulfate and potassium persulfate; and water-soluble organic peroxides such as disuccinic acid peroxide, bisglutaric acid peroxide, and tert-butyl hydroperoxide (also referred to as "TBHP", hereinafter).

Preferred examples of the water-soluble redox catalyst include combination of an oxidizing agent such as bromic acid or salt thereof, chloric acid or salt thereof, persulfuric acid or salt thereof, permanganic acid or salt thereof, or hydrogen peroxide; with a reducing agent such as sulfurous acid or salt thereof, hydrogen sulfite or salt thereof, thiosulfuric acid or salt thereof, organic acid, or inorganic salt. The persulfate is preferably potassium persulfate, or ammonium persulfate. The sulfite is preferably sodium sulfite. Examples of the inorganic salt include combination of sulfate anion, sulfite anion or chloride anion, with metal ion. The metal ion is preferably transition metal ion, which is exemplified by manganese, iron, cobalt, nickel, copper, zinc, cerium, and silver ions. Among them, iron ion is preferred. The inorganic salt is preferably iron(II) sulfate.

The polymerization initiator is preferably oil-soluble radical initiator or water-soluble radical initiator. From the viewpoint of more efficiently producing the fluorine-containing polymer, the oil-soluble radical initiator is more preferred, and oil-soluble organic peroxide is still more preferred.

The polymerization initiator may be used singly, or in combination of two or more kinds thereof.

The usage of the polymerization initiator is preferably 1 to 1000 ppm by mass, more preferably 5 to 750 ppm, and still more preferably 10 to 500 ppm, with respect to the usage of the specific monomer.

(Other Components)

Any component other than those described above (also referred to as "other components", hereinafter) may further be used, for the polymerization of the specific monomer. Specific examples of such other components include reducing agent.

The usage of such other component is preferably 1 to 2000 ppm, per 100 parts by mass of the usage of the specific monomer.

(Production Method)

The second fluoropolymer, obtained in the second fluoropolymer producing step, may be copolymerized with the first perfluoropolymer.

The specific monomer is fed into a reaction system (that is, a polymerization reactor) by a usual method. For example, the specific monomer may be continuously or intermittently fed to the reaction system, so as to adjust the polymerization pressure to a predetermined pressure. The specific monomer may be dissolved in an aqueous medium, and the obtained solution may be continuously or intermittently fed into the reaction system.

The polymerization initiator, when used, may be fed to the reaction system in a batch manner, or in a divided manner.

The polymerization temperature is preferably from 10 to 95°C, and more preferably from 15 to 90°C.

The polymerization pressure is preferably from 0.5 to 4.0 MPaG, and more preferably from 0.6 to 3.5 MPaG.

The polymerization time, for the batch treatment, is preferably from 90 to 1000 minutes, and more preferably from 90 to 700 minutes.

In a case where the first perfluoropolymer is given as particle, the monomer supposedly polymerizes inside or in the vicinity of the particle of the first perfluoropolymer. In the method of producing a fluorine-containing polymer of the present disclosure, it is therefore considered that the particle that contains the first perfluoropolymer and the second fluoropolymer is produced. That is, the second fluoropolymer is supposedly obtained in the form of particle that contains the first perfluoropolymer and the second fluoropolymer. In this case, the aqueous dispersion having the particle that contains the first perfluoropolymer and the second fluoropolymer dispersed in the aqueous medium is obtained.

In the method of producing a fluorine-containing polymer of the present disclosure, it is preferred to obtain the particle that contains the first perfluoropolymer and the second fluoropolymer.

That is, the method of producing a fluorine-containing polymer of the present disclosure includes:

preparing the aqueous dispersion A that contains the particle of the first perfluoropolymer having a glass transition temperature of 10°C or lower, and the aqueous medium; and

producing the particle that contains the first perfluoropolymer and the second fluoropolymer different from the first perfluoropolymer, by polymerizing, in the aqueous dispersion A, the monomer that contains tetrafluoroethylene and perfluoro(alkyl vinyl ether),

wherein, before starting the polymerization of the monomer, the content of the first perfluoropolymer is 0.01 to 4.0 mass% with respect to the total mass of the aqueous dispersion A, and

before starting the polymerization of the monomer, the aqueous dispersion A is free of the fluorine-containing emulsifier, or the content of the fluorine-containing emulsifier is 100 ppm by mass or less, with respect to the total mass of the aqueous dispersion A.

The average particle size of the particle that contains the first perfluoropolymer and the second fluoropolymer is preferably 1 μm or smaller, preferably 700 nm or smaller, and more preferably 500 nm or smaller, from the viewpoint of polymerization stability. The lower limit value of the average particle size of the particle that contains the first perfluoropolymer and the second fluoropolymer is preferably 30 nm, from the viewpoint of aggregability.

In the method of producing a fluorine-containing polymer of the present disclosure, the average particle size of the particle is estimated by measuring the particle size distribution by laser diffractometry/scatterometry, to obtain a cumulative curve while assuming the total volume of the particle population as 100%. The average particle size is given by a particle size that corresponds to a point on the cumulative curve, at which the cumulative volume reaches 50%.

In a case where the first perfluoropolymer is given in a particle form, and where the particle that contains the first perfluoropolymer and the second fluoropolymer is obtained by the method of producing a fluorine-containing polymer of the present disclosure, ratio of the average particle size of the particle that contains the first perfluoropolymer and the second fluoropolymer, relative to the average particle size of the particle of the first perfluoropolymer, is preferably 2 or larger, and more preferably 3 or larger. The ratio of the average particle size is preferably 10 or smaller, and more preferably 8 or smaller, from the viewpoint of polymerization stability. With the ratio adjusted to 2 or larger, the obtainable particle will have excellent heat resistance, while reflecting the physical property of the second fluoropolymer.

(Fluorination Step)

It is preferred that the method of producing a fluorine-containing polymer of the present disclosure further includes subjecting the first perfluoropolymer and the second fluoropolymer to a fluorination treatment (also referred to as "fluorination step", hereinafter).

The method of the fluorination treatment is not particularly limited, which may be implemented by any of known methods. For example, the fluorination may rely upon bringing fluorine gas into contact with the first perfluoropolymer and the second fluoropolymer.

The fluorine gas used herein may be diluted with inert gas.

Examples of the inert gas include rare gases such as helium gas, neon gas, and argon gas; and nitrogen gas. Nitrogen gas or helium gas is preferred, and nitrogen gas is more preferred for its economical advantage. Proportion of fluorine gas, per 100 vol% in total of fluorine gas and inert gas, is preferably from 10 to 60 vol%.

Temperature of the fluorination treatment is from 100 to 250°C, for example.

Fluorination time is from 1 to 15 hours, for example.

By implementing the fluorination step, functional groups contained in the first perfluoropolymer and the second fluoropolymer are fluorinated. The heat resistance improves as a result of the fluorination.

The total number of functional groups per $10^6$ carbon atoms in the main chains of the first perfluoropolymer and the second fluoropolymer is preferably smaller than 100, more preferably 50 or smaller, and still more preferably 30 or smaller. The lower limit of the number of functional groups is zero.

[Aqueous Dispersion]

The aqueous dispersion of the present disclosure is an aqueous dispersion that contains the aqueous medium and the melt-moldable particle, the particle has an average particle size of 1 $\mu$m or smaller; the particle contains one or more kinds of fluorine-containing polymer; the fluorine-containing polymer contains the TFE unit, the PAVE unit, and the compound (1) unit, the content of the PAVE unit is 0.05 to 5.0 mol%, with respect to all the constitutional units of the fluorine-containing polymer; the content of the particle is 1 to 50 mass% with respect to the total mass of the aqueous dispersion; and the aqueous dispersion is free of the fluorine-containing emulsifier, or the content of the fluorine-containing emulsifier is 10 ppm by mass or less, with respect to the content of the fluorine-containing polymer.

The aqueous dispersion of the present disclosure is obtainable, for example, by the method of producing a fluorine-containing polymer of the present disclosure.

The aforementioned aqueous dispersion A is an aqueous dispersion obtainable in the middle of the method of producing a fluorine-containing polymer of the present disclosure, and is different from the aqueous dispersion of the present disclosure.

<Melt-Moldable Particle>

The aqueous dispersion of the present disclosure contains a melt-moldable particle.

In the present disclosure, "melt-moldable" means that the melt flow rate (MFR) is in the range from 0.1 to 1000 g/10 min.

The MFR of the particle is preferably 0.1 to 100 g/10 min, and more preferably 1 to 80 g/10 min.

In the present disclosure, the MFR is measured in accordance with ASTM D3307 under conditions including a temperature of 372°C, and a load of 49 N, and is given by a mass that flows out from an orifice 2 mm in diameter and 8 mm in length, over 10 minutes.

The average particle size of the particle is 1 $\mu$m or smaller, which is preferably 700 nm or smaller, and more preferably 500 nm or smaller, from the viewpoint of dispersibility. The lower limit value of the average particle size of the particle is preferably 30 nm, from the viewpoint of aggregability.

In the present disclosure, the average particle size of the particle is estimated by measuring the particle size distribution by laser diffractometry/scatterometry, to obtain a cumulative curve while assuming the total volume of the particle population as 100%. The average particle size is given by a particle size that corresponds to a point on the cumulative curve, at which the cumulative volume reaches 50%.

The content of the particle is 1 to 50 mass% with respect to the total mass of the aqueous dispersion of the present disclosure, from the viewpoint of dispersion stability, which is preferably 2 to 45 mass%, and more preferably 3 to 40 mass%.

The particle contained in the aqueous dispersion of the present disclosure contains one or more kinds of the fluorine-containing polymer.

In a case where the particle contains two or more kinds of fluorine-containing polymer, the particle only needs to contain the fluorine-containing polymer that contains the TFE unit, the PAVE unit, and the compound (1) unit, and may even contain a fluorine-containing polymer that does not apply to the fluorine-containing polymer that contains the TFE unit, the PAVE unit, and the compound (1) unit.

In a case where the particle contains two or more fluorine-containing polymers, one fluorine-containing polymer need not contain all of the TFE unit, the PAVE unit, and the compound (1) unit. For example, the particle may contain a fluorine-containing polymer that contains the TFE unit and the PAVE unit, and a fluorine-containing polymer that contains the TFE unit and the compound (1) unit.

The content of the compound (1) unit, with respect to the total content of the TFE unit and the compound (1) unit, is preferably 0.2 to 7.0 mol%, more preferably 0.5 to 6.0 mol%, and still more preferably 1.0 to 5.0 mol%, from the viewpoint of heat resistance.

In a case where the particle contains two or more kinds of fluorine-containing polymer, any of the fluorine-containing polymers contained in the particle need not be melt-moldable, as long as the particle is melt-moldable.

The content of the PAVE unit is 0.05 to 5.0 mol%, preferably 0.1 to 4.0 mol%, and more preferably 0.1 to 3.0 mol%, with respect to all the constitutional units of the fluorine-containing polymer. With the content of the PAVE unit adjusted to 0.05 to 5.0 mol%, the composition excels in heat resistance.

In a case where the particle contains two or more kinds of fluorine-containing polymer, "all the constitutional units of the fluorine-containing polymer" means all the constitutional units in the two or more kinds of fluorine-containing polymer.

In the PAVE unit, PAVE is preferably a monomer represented by Formula (2) above.

The content of the first perfluoropolymer in the particle is preferably 0.01 mass% or more, and more preferably 0.1 mass% or more.

The content of the first perfluoropolymer in the particle is preferably 10 mass% or less, and more preferably 5 mass% or less.

The content of the second fluoropolymer in the particle is preferably 90 mass% or more, and more preferably 95 mass% or more.

The content of the second fluoropolymer in the particle is preferably 99.99 mass% or less, and more preferably 99.9 mass% or less.

In the particle, proportion of the content of the first perfluoropolymer, with respect to the total content of the first perfluoropolymer and the second fluoropolymer, is preferably 0.01 mass% or larger, and more preferably 0.1 mass% or larger, from the viewpoint of improving physical properties including heat resistance.

In the particle, proportion of the content of the first perfluoropolymer, with respect to the total content of the first perfluoropolymer and the second fluoropolymer, is preferably 10 mass% or smaller, and more preferably 5 mass% or smaller, from the viewpoint of improving the physical properties including heat resistance.

Among them, PAVE is preferably PMVE, from the viewpoint of more excellent heat resistance.

The particle preferably contains the first perfluoropolymer and the second fluoropolymer. Details of the first perfluoropolymer and the second fluoropolymer have been described above.

<Aqueous Medium>

Specific examples of the aqueous medium contained in the aqueous dispersion A of the present disclosure are the same as the specific examples of the aqueous medium used for producing the first perfluoropolymer.

The content of the aqueous medium is preferably 50 to 99 mass%, more preferably 60 to 99 mass%, and still more preferably 70 to 99 mass%, with respect to the total mass of the aqueous dispersion of the present disclosure.

<Others>

It is preferred that the aqueous dispersion of the present disclosure is substantially free of the fluorine-containing emulsifier. Details of the fluorine-containing emulsifier have been described above.

The aqueous dispersion of the present disclosure is free of the fluorine-containing emulsifier, or the content of the fluorine-containing emulsifier is 100 ppm by mass or less, preferably 10 ppm by mass or less, more preferably 5 ppm by mass or less, and still more preferably 1 ppm by mass or less, with respect to the content of the fluorine-containing polymer.

The content of the fluorine-containing emulsifier, with respect to the content of the fluorine-containing polymer, may be estimated by a method same as the method of measuring the content of fluorine-containing surfactant by liquid chromatography-mass spectrometry, described in paragraphs [0364] to [0369] of WO 2021/045227 A.

The viscosity of the aqueous dispersion of the present disclosure is preferably 0.8 to 2.0 mPa·s, and more preferably 1.0 to 1.5 mPa·s from the viewpoint of workability.

The viscosity of the aqueous dispersion is a value measured with a B-type viscometer, at room temperature (25°C) and at a rotation speed of 30 rpm. The viscosity is given by an average value of three measured values from the measurement repeated three times.

In the aqueous dispersion of the present disclosure, the content of the compound represented by Formula (S1) below, with respect to the fluorine-containing polymer, is preferably 1 ppb by mass or more, and more preferably 10 ppb by mass or more with respect to the fluorine-containing polymer, from the viewpoint of stabilizing the fluorine-containing polymer in the aqueous dispersion.

In the aqueous dispersion of the present disclosure, the content of the compound represented by Formula (S1) below, with respect to the fluorine-containing polymer, is preferably 10000 ppb by mass or less, more preferably 1000 ppb by mass or less, and still more preferably 300 ppb by mass or less, from the viewpoint of degradation of the physical properties.

In the aqueous dispersion of the present disclosure, the content of the compound represented by Formula (S2) below, with respect to the fluorine-containing polymer, is preferably 0.1 ppb by mass or more, and more preferably 1 ppb by mass or more, with respect to the fluorine-containing polymer, from the viewpoint of stabilizing the fluorine-containing polymer in the aqueous dispersion.

In the aqueous dispersion of the present disclosure, the content of the compound represented by Formula (S2) below, with respect to the fluorine-containing polymer, is preferably 50 ppb by mass or less, and more preferably 25 ppb by mass or less, from the viewpoint of degradation of the physical properties:

$$\text{Formula (S1):} \qquad \text{H-(CF}_2)_n\text{-COOM,}$$

and

$$\text{Formula (S2):} \qquad \text{H-(CF}_2)_m\text{-SO}_3\text{M.}$$

In Formula (S1) and Formula (S2), each M independently represents a hydrogen atom, Na, K, or $NH_4$, n represents from 7 to 11, and m represents from 8 to 12.

The content of the compound represented by Formula (S1), with respect to the fluorine-containing polymer, may be calculated by a method with use of an aqueous dispersion, from among the measurement methods with use of a liquid chromatograph-mass spectrometer described in paragraphs [0710] to [0720] of WO 2018/181904 A.

The content of the compound represented by Formula (S2), with respect to the content of the fluorine-containing polymer, may be calculated by a method with use of an aqueous dispersion, from among the measurement methods with use of a liquid chromatograph-mass spectrometer described in paragraphs [0721] to [0732] of WO 2018/181904 A.

The compound represented by Formula (S1), and the compound represented by Formula (S2) are components that can be generated during the polymerization of the aforementioned specific monomer (TFE, in particular), in the presence of polymerization initiator, chain transfer agent, or fluorine-containing emulsifier. Therefore, the method of producing a fluorine-containing polymer of the present disclosure, conducted with no use of the fluorine-containing emulsifier, can suppress the amount of generation of the compound represented by Formula (S1) and the compound represented by Formula (S2), so that it is easy to adjust the contents of these compounds within the aforementioned ranges.

<Application>

The aqueous dispersion of the present disclosure does not essentially need the fluorine-containing emulsifier as described above, and may therefore be easily given, by solvent replacement, in the form of dispersion for example in an organic solvent such as N-methylpyrrolidone or acetone.

For example, the dispersion in the organic solvent is obtainable by mixing the aqueous dispersion of the present disclosure with the organic solvent, followed by dehydration by evaporation, or with use of anhydrous sodium sulfate or the like.

In the aqueous dispersion of the present disclosure, the fluorine-containing polymer stably disperses even in the absence of the fluorine-containing emulsifier. The aqueous dispersion is, therefore, preferably applicable to coating, binder or the like.

Also a powder is obtainable by allowing the particle to aggregate from the aqueous dispersion of the present disclosure.

Examples of the method of aggregation include, but are not limited to, freeze aggregation, acid aggregation, base aggregation, and aggregation with use of coagulant.

For the freeze aggregation, the aggregation temperature is preferably from -20 to 0°C. Aggregation time is preferably 1 hour or longer, and more preferably 2 hours or longer.

For acid aggregation, a preferred method is such as adding an acid-containing solution to the aqueous dispersion of the present disclosure. Examples of the acid to be added include hydrochloric acid, nitric acid, sulfuric acid, oxalic acid, and hydrofluoric acid. Hydrochloric acid is preferred. The concentration of the acid in the acid-containing solution is preferably from 0.1 to 50 mass%, more preferably from 1 to 30 mass%, and still more preferably from 1 to 10 mass%.

For base aggregation, a preferred method is such as adding a base-containing solution to the aqueous dispersion of the present disclosure. Examples of the base to be added include sodium hydroxide, potassium hydroxide, ammonium carbonate, and the like. Sodium hydroxide is preferred. The concentration of the base in the base-containing solution is preferably from 0.1 to 50 mass%, more preferably from 1 to 30 mass%, and still more preferably from 1 to 10 mass%.

For the aggregation with use of the coagulant, any of known coagulants may be used. Examples of known coagulants include aluminum salt, calcium salt, and magnesium salt. Specific examples thereof include aluminum sulfate, alum represented by a general formula $M'Al(SO_4)_2 \cdot 12H_2O$ [in the formula, M' represents a monovalent cation other than lithium], calcium nitrate, and magnesium sulfate. Alum is preferred, and potassium alum having potassium for M is more preferred.

The method of aggregation is preferably the base aggregation, by which the aggregation can proceed particularly with ease.

[Particle]

The particle of the present disclosure is the melt-moldable particle, wherein

the particle has an average particle size of 1 $\mu$m or smaller;
the particle contains one or more kinds of fluorine-containing polymer;
the fluorine-containing polymer contains the TFE unit, the PAVE unit, and the compound (1) unit;
the content of the PAVE unit is from 0.05 to 5.0 mol%, with respect to all the constitutional units of the fluorine-containing polymer;
the particle is free of the fluorine-containing emulsifier, or the content of the fluorine-containing emulsifier is 100 ppm by mass or less, with respect to the content of the fluorine-containing polymer; and
with respect to the fluorine-containing polymer, the content of the compound represented by Formula (S1) is from 1 to 10000 ppb by mass, and the content of the compound represented by Formula (S2) is 100 ppb by mass or less:
Formula (S1): $H\text{-}(CF_2)_n\text{-}COOM$, and

Formula (S2): $H\text{-}(CF_2)_m\text{-}SO_3M$.

In Formula (S1) and Formula (S2), each M independently represents a hydrogen atom, Na, K, or $NH_4$, n represents from 7 to 11, and m represents from 8 to 12.

The particle of the present disclosure is obtainable, for example, by the method of producing the fluorine-containing polymer of the present disclosure. Alternatively, the particle of the present disclosure may be obtainable by aggregation of the particle from the aqueous dispersion of the present disclosure.

<Melt-Moldable Particle>

Definition of the melt-moldable particles, regarding the particle of the present disclosure, is the same as that in the aqueous dispersion of the present disclosure, inclusive of suitable aspects and ranges thereof.

Note that the average particle size of the particle of the present disclosure means a value obtained by photographing the particle under a scanning electron microscope, finding the particle sizes from five different particles on the obtained SEM image, and then arithmetically averaging the sizes.

<Others>

It is preferred that the particle of the present disclosure is substantially free of the fluorine-containing emulsifier. Details of the fluorine-containing emulsifier have been described above.

The particle of the present disclosure is free of the fluorine-containing emulsifier, or the content of the fluorine-containing emulsifier is 100 ppm by mass or less, preferably 10 ppm by mass or less, more preferably 5 ppm by mass or less, and still more preferably 1 ppm by mass or less, with respect to the content of the fluorine-containing polymer.

The content of the fluorine-containing emulsifier, with respect to the content of the fluorine-containing polymer, may be estimated by a method same as the method of measuring the content of fluorine-containing surfactant by liquid chromatography-mass spectrometry, described in paragraphs [0364] to [0369] of WO 2021/045227 A.

The particle of the present disclosure has a content of the compound represented by Formula (S1) of 1 to 10000 ppb by mass, and a content of the compound represented by Formula (S2) of 100 ppb by mass or less, with respect to the fluorine-containing polymer.

The compound represented by Formula (S1), and the compound represented by Formula (S2) are components that can be generated during the polymerization of the aforementioned specific monomer (TFE, in particular), in the presence of polymerization initiator, chain transfer agent, or emulsifier. Therefore, the method of producing a fluorine-containing polymer of the present disclosure, conducted with no use of the emulsifier, can suppress the amount of generation of the compound represented by Formula (S1) and the compound represented by Formula (S2), so that it is easy to adjust the contents of these compounds within the aforementioned ranges.

In the particle of the present disclosure, the content of the compound represented by Formula (S1), with respect to the fluorine-containing polymer, is preferably 10 ppb by mass or more with respect to the fluorine-containing polymer, from the viewpoint of workability.

In the particle of the present disclosure, the content of the compound represented by Formula (S1), with respect to the fluorine-containing polymer, is preferably 1000 ppb by mass or less, and more preferably 300 ppb by mass or less, from the viewpoint of suppressing the physical properties including heat resistance from degrading.

In the particle of the present disclosure, the content of the compound represented by Formula (S2), with respect to the fluorine-containing polymer, is preferably 0.1 ppb by mass or more, and more preferably 1 ppb by mass or more with respect to the fluorine-containing polymer, from the viewpoint of workability.

In the particle of the present disclosure, the content of the compound represented by Formula (S2), with respect to the fluorine-containing polymer, is preferably 50 ppb by mass or less, and more preferably 25 ppb by mass or less, from the viewpoint of suppressing the physical properties including heat resistance from degrading.

The content of the compound represented by Formula (S1), with respect to the fluorine-containing polymer, may be calculated by a method with use of powder, from among the measurement methods with use of a liquid chromatograph-mass spectrometer described in paragraphs [0710] to [0720] of WO 2018/181904 A.

The content of the compound represented by Formula (S2), with respect to the fluorine-containing polymer, may be calculated by a method with use of powder, from among the measurement methods with use of a liquid chromatograph-mass spectrometer described in paragraphs [0721] to [0732] of WO 2018/181904 A.

The particle of the present disclosure may further be subjected to the fluorination treatment, thereby adjusting the content of the compound represented by Formula (S1). Examples of the method of fluorination treatment include those having been described above.

Fluorination of the particle of the present disclosure can reduce the content of the compound represented by Formula (S1), in the particle of the present disclosure.

The total number of functional groups per $10^6$ carbon atoms in the main chain of the fluorine-containing polymer of the present disclosure is preferably smaller than 100, more preferably 50 or smaller, and still more preferably 30 or smaller. The lower limit of the number of functional groups is zero.

Examples of the functional group include those described above. Also the method of measuring the number of functional groups is as described above.

<Application>

The particle of the present disclosure is substantially free of the emulsifier, and is therefore easily given the form of dispersion in an organic solvent such as N-methylpyrrolidone or acetone.

The particle of the present disclosure may also be used as a powder composition. Examples

Hereinafter, the present invention will be detailed with reference to cases. Case 1 corresponds to Example, and Cases 2 and 3 correspond to Comparative Examples. The present invention is, however, not limited to these Cases. The amount of blending of each component in the tables below is given on the mass basis.

[Methods of Measurement and Evaluation]

The individual measurement methods and evaluation methods are as follows.

<Glass Transition Temperature (Tg)>

Tg was measured with use of NEXTA DSC600 from Hitachi High-Tech Corporation. More specifically, 5 mg of a sample to be measured was weighed on an aluminum sample pan, and the sample was heated to 100°C at a heating rate of 10°C/min, in a nitrogen atmosphere. The sample was then cooled down to -60°C at a rate of 10°C/min. Upon reaching a predetermined temperature, the sample was heated again up to 100°C at 10°C/min. Tg was estimated from an inflection point found in the second temperature elevation.

<Average Particle Size of Particle in Liquid>

A raw material solution was degassed at room temperature (25°C) for 5 minutes, nitrogen was pressurized up to 0.2 MPaG, and nitrogen was purged to recover the atmospheric pressure, to obtain a sample to be measured. Measurement of the particle size of the obtained sample was started, while setting the cumulative count to 100 counts on a laser diffraction/scattering particle size distribution analyzer (ELSZ, from Otsuka Electronics Co., Ltd.). D50 was estimated from the particle size measured over the range from 1 to 300 nm, and employed as the average particle size of the particle in the raw material liquid.

Note the average particle size of the particle in the aqueous dispersion liquid that corresponds to the raw material liquid, measured in the same manner as in the raw material liquid, was found to be same as the average particle size of the particle in the raw material liquid. Now, the aqueous dispersion liquid that corresponds to the raw material liquid, in Case 1 described later, means aqueous dispersion liquid A1 that corresponds to raw material liquid T2.

The average particle size (D50) of the particle in the aqueous dispersion of each Case, obtained with use of the aqueous dispersion that corresponds to the raw material liquid, was measured with a laser diffraction/scattering particle size distribution analyzer (ELSZ, from Otsuka Electronics Co., Ltd.). Note that the range of the particle size to be measured was not limited, unlike the method of measuring the average particle size of the particle in the raw material liquid. Now, the aqueous dispersion of each Case, obtained with use of the aqueous dispersion that corresponds to the raw material liquid, means the aqueous dispersion 1 obtained with use of aqueous dispersion A1 in Case 1 described later.

<Average Particle Size of Particle after being Dried>

The aqueous dispersion that contains the second fluorine-containing polymer obtained in each Case was allowed to aggregate, filtered, and dried to obtain the particle, which was then photographed under a scanning electron microscope (for example, JSM-IT700HR InTouchScope, from JEOL Ltd.). The particle sizes were found from five different particles measured on the acquired SEM image, and then arithmetically averaged.

<Proportion of Individual Constitutional Units in Polymer>

Proportion of the individual constitutional units in the polymer was estimated by $^{19}$F-NMR analysis and infrared absorption spectrometry.

<Content of Fluorine-Containing Emulsifier>

The content of the fluorine-containing emulsifier, with respect to the content of the fluorine-containing polymer, was estimated by a method same as the method of measuring the content of fluorine-containing surfactant by liquid chromatography-mass spectrometry described in paragraphs [0364] to [0369] of WO 2021/045227 A.

<Content of Compound Represented by Formula (S1)>

The content of the compound represented by Formula (S1) above, with respect to the content of the fluorine-containing polymer, was calculated by a method with use of aqueous dispersion or powder composition, from among the measurement methods with use of a liquid chromatograph-mass spectrometer described in paragraphs [0710] to [0720] of WO 2018/181904 A. The apparatus used herein was Agilent 1260 Series HPLC/6460S, and a column used herein was Cadenza CD-C18 from Imtakt.

<Content of Compound Represented by Formula (S2)>

The content of the compound represented by Formula (S2) above, with respect to the content of the fluorine-containing polymer, was calculated by a method with use of aqueous dispersion or powder composition, from among the measurement methods with use of a liquid chromatograph-mass spectrometer described in paragraphs [0721] to [0732] of WO 2018/181904 A. The apparatus used herein was Agilent 1260 Series HPLC/6460S, and a column used herein was Cadenza CD-C18 from Imtakt.

[Production of Raw Material Liquid T1]

Into a 1.3 L stainless steel pressure-resistant reactor, ultrapure water (717 g), PMVE (50 g), and TFE (8 g) were placed, followed by heating to 90°C under stirring at 500 rpm. Next, an aqueous ammonium persulfate solution (3.6 mass%, 5 mL) was added, to initiate the polymerization. The pressure in the reactor, which would decline with the start of polymerization, was kept constant by adding TFE. Upon addition of 1 g of TFE under pressure, the reactor was cooled, to terminate the polymerization reaction. After collecting the gas remaining in the reactor, the liquid was taken out. This liquid was used as the raw material liquid T1.

The raw material liquid T1 was allowed to aggregate under freezing, and filtered. NMR analysis of the thus obtained fluorine-containing polymer 1A revealed a TFE unit/PMVE unit of 52/48 (molar ratio), and a Tg of -5.9°C.

[Production of Raw Material Liquid T2]

Dowex Monosphere 650C (cation exchange resin from DuPont, 20 g) was added to the aforementioned raw material liquid T1 (490 g). Sixty minutes after the start of stirring, the raw material liquid was filtered to separate the raw material liquid and the ion exchange resin. Purolite A300 (anion exchange resin from Purolite, 20 g) was added to the raw material liquid thus filtered. Sixty minutes after the start of stirring, the raw material liquid was filtered to separate the liquid from the ion exchange resin, to obtain the raw material liquid T2.

The raw material liquid T2 was found to have the particle (average particle size: 52 nm) of the fluorine-containing polymer 1A dispersed in the aqueous medium. The content of the fluorine-containing polymer 1A was found to be 0.4 mass%, with respect to the total mass of the raw material liquid T2.

<Case 1>

Into a 1.0 L stainless steel pressure-resistant reactor, ultrapure water (149 g), the raw material liquid T2 (475 g), and t-BuOMe (0.5 g) were placed, to obtain the aqueous dispersion A1. The aqueous dispersion A1 was found to have a pH of 4.7, a viscosity of 1.1 mPa·s, and a thixotropic ratio of 1.0. To the aqueous dispersion A1, $CF_2 = CF - CF_2 - O - C_3F_7$ (M1, 2.3 g) was added, and the temperature was raised to 63°C under stirring at 260 rpm. TFE was fed under pressure until the reactor pressure reached 1.3 MPaG, an aqueous ammonium persulfate (APS) solution (0.5 mass%, 5 mL) was then added, to initiate the polymerization. The pressure in the reactor, which would decline with the start of polymerization, was kept constant by adding TFE. Every time 5 g of TFE was fed under pressure, 0.24 g of M1 was added. Upon feeding of 170 g of TFE under pressure, the reactor was cooled, to terminate the polymerization reaction. The polymerization time totaled 470 minutes.

After collecting the gas remaining in the reactor, the liquid was taken out. This liquid was used as aqueous dispersion 1. The aqueous dispersion 1 was a dispersion in which the particle (average particle size: 267 nm) that contains the fluorine-containing polymer 1A is dispersed in the aqueous medium, and was found to have a solid concentration of 21.0 mass%, a pH of 2.0, and a viscosity of 1.4 mPa·s. The obtained particle was found to contain, in the same particle, the first perfluoropolymer that contains the TFE unit and the PMVE unit, and the second fluoropolymer that contains the TFE unit and the M1 unit. Ratio of the average particle size of the obtained particle, with respect to the average particle size of the particle of the fluorine-containing polymer 1A contained in the raw material liquid T2, was found to be 5.1. The aqueous dispersion 1 was found to have a content of the fluorine-containing emulsifier, with respect to the total content of the first perfluoropolymer and the second fluoropolymer, of less than 25 ppb by mass.

The obtained particle was allowed to aggregate, and dried, to obtain particle 1 (average particle size: 252 nm). Composition of the particle 1 was estimated by NMR, revealing a TFE unit/M1 unit/PMVE unit of 98.5/1/0.5 (molar ratio). The MFR was found to be 6.5 g/10 min.

The particle was found to contain, in the same particle, the first perfluoropolymer that contains the TFE unit and the PMVE unit, and the second fluoropolymer that contains the TFE unit and the M1 unit. The proportion of the content of the first perfluoropolymer was found to be 98.9 mass%, meanwhile the proportion of the content of the second fluoropolymer was found to be 1.1 mass%.

The particle 1 was found to have a content of the fluorine-containing emulsifier, with respect to the total content of the first perfluoropolymer and the second fluoropolymer, of less than 25 ppb by mass.

The particle 1 was found to have a content of the compound represented by Formula (S1) above of 190 ppb by mass, and a content of the compound represented by Formula (S2) above of less than 25 ppb by mass, with respect to the total content of the first perfluoropolymer and the second fluoropolymer.

<Case 2>

Into a 1.0 L stainless steel pressure-resistant reactor, ultrapure water (624 g), $CF_2 = CF - CF_2 - O - C_3F_7$ (M1, 2.3

g), and t-BuOMe (0.5 g) were placed, to obtain aqueous dispersion C. The aqueous dispersion C was heated to 63°C under stirring at 260 rpm. TFE was fed under pressure until the reactor pressure reached 1.3 MPaG, an aqueous APS solution (0.5 mass%, 5 mL) was then added, to initiate the polymerization. The pressure in the reactor, which would decline with the start of polymerization, was kept constant by adding TFE. Every time 5 g of TFE was fed under pressure, 0.24 g of M1 was added. Upon feeding of 50 g of TFE under pressure, the reactor was cooled, to terminate the polymerization reaction. The polymerization time totaled 300 minutes.

The liquid, taken after collection of the gas remaining in the reactor, was found to cause entire aggregation, thus failed in obtaining the aqueous dispersion having the particle of fluorine-containing polymer dispersed in the aqueous medium.

<Case 3>

Into a 1.0 L stainless-steel pressure-resistant reactor, ultrapure water (608 g), a fluorine-containing emulsifier (ammonium salt of $C_2F_5OCF_2CF_2OCF_2COOH$, 30 mass%, 16 g), $CF_2 = CF - CF_2 - O - C_3F_7$ (M1, 2.3g), and t-BuOMe (0.5 g) were placed, to obtain aqueous dispersion D. The aqueous dispersion D was heated to 63°C under stirring at 260 rpm. TFE was fed under pressure until the reactor pressure reached 1.3 MPaG, an aqueous APS solution (0.5 mass%, 5 mL) was then added, to initiate the polymerization. The pressure in the reactor, which would decline with the start of polymerization, was kept constant by adding TFE. Every time 5 g of TFE was fed under pressure, 0.24 g of M1 was added. Upon feeding of 170 g of TFE under pressure, the reactor was cooled, to terminate the polymerization reaction. The polymerization time totaled 210 minutes.

After collecting the gas remaining in the reactor, the liquid was taken out. This liquid was used as aqueous dispersion 3. The aqueous dispersion 3 was found to have a solid concentration of 22.0 mass%.

The obtained particle was allowed to aggregate, and dried, to obtain particle 3. Composition of the particle 3 was estimated by NMR, revealing a TFE unit/M1 unit of 99/1 (molar ratio). The MFR was found to be 1.5 g/10 min.

The particle 3 was found to have a content of the fluorine-containing emulsifier, with respect to the content of the fluorine-containing polymer having the TFE unit and the M1 unit, of 2000 ppb by mass.

The particle 3 was found to have a content of the compound represented by Formula (S1) above of 180 ppb by mass, and a content of the compound represented by Formula (S2) above of less than 25 ppb by mass, with respect to the content of the fluorine-containing polymer having the TFE unit and the M1 unit.

[Evaluation]

(Fluorination Treatment)

Each of the particle 1 and particle 3 was placed in a vacuum vibration reactor, followed by heating to 210°C. After evacuation, fluorine gas diluted to 20 vol% with nitrogen gas was introduced. After two hours, the inside of the reactor was sufficiently replaced with nitrogen gas, to terminate the fluorination reaction. Each fluorinated particle was analyzed to estimate the number of terminal functional groups.

(Number of Functional Groups per $10^6$ Carbon Atoms in Main Chain)

Each of the fluorinated particle 1 and particle 3 was press-molded at 340°C, to produce a film of 200 $\mu$m thick. The film was analyzed with a Fourier transform infrared spectrophotometer under scanning repeated 16 times, to obtain an infrared absorption spectrum. Each of the fluorinated particle 1 and particle 3 was placed in a vacuum vibration reactor, followed by heating to 210°C. After evacuation, fluorine gas diluted to 20 vol% with nitrogen gas was introduced. After 10 hours, the inside of the reactor was sufficiently replaced with nitrogen gas to terminate the fluorination reaction, to obtain each of fully fluorinated particle 1 and particle 3. Each of the fully fluorinated particle 1 and particle 3 was press-molded at 340°C, to produce a fully fluorinated film of 200 $\mu$m thick. The fully fluorinated film was analyzed with a Fourier transform infrared spectrophotometer under scanning repeated 16 times, to obtain a base spectrum.

With reference to absorption peaks attributable to specific functional groups appeared in a differential spectrum between the obtained infrared absorption spectrum and the base spectrum, the number N of each functional group per $10^6$ carbon atoms in the main chain of each of the fluorinated particle 1 and particle 3 was calculated, according to Equation (A) below:

$$N = I \times K/t...(A),$$

I: absorbance,

K: correction factor, and

t: film thickness (mm).

Table 2 shows absorption frequency, molar extinction coefficient, and correction factor for specific functional groups including $-CF_2H$. The molar extinction coefficient of the specific functional groups is estimated from FT-IR measurement data of low-molecular-weight model compounds.

[Table 2]

| Functional group | Absorption frequency ($cm^{-1}$) | Molar extinction coefficient (l/cm/mol) | Correction factor | Model compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| $-COOCH_3$ | 1795 | 680 | 342 | $C_7F_{15}COOCH_3$ |
| $-CONH_2$ | 3436 | 506 | 460 | $C_7H_{15}CONH_2$ |
| $-CH_2OH$, -OH | 3648 | 104 | 2236 | $C_7H_{15}CH_2OH$ |
| $-CF_2H$ | 3020 | 8.8 | 26485 | $H(CF_2CF_2)_3CH_2OH$ |
| $-CF = CF_2$ | 1795 | 635 | 366 | $CF_2 = CF_2$ |

In the copolymer, the absorption frequencies of $-CH_2CF_2H$, $-CH_2COF$, $-CH_2COOH$, - $CH_2COOCH_3$, and $-CH_2CONH_2$ will be several tens of kaysers ($cm^{-1}$) lower than the absorption frequencies of $-CF_2H$, -COF, -COOH (free and bonded), $-COOCH_3$, and $-CONH_2$ shown in the table.

For example, the number of -COF is given by a sum of the number of functional groups estimated from an absorption peak at an absorption frequency of 1883 $cm^{-1}$ attributable to - $CF_2COF$, and the number of functional groups estimated from an absorption peak at an absorption frequency of 1840 $cm^{-1}$ attributable to $-CH_2COF$.

(Heat Resistance)

Two grams of each of the fluorinated particle 1 and particle 3 were weighed, and heated at 340°C for 2 hours. Degree of foaming of the sample after heating was visually observed.

The fluorinated particle 1 was found to have less than 10 functional groups, per $10^6$ carbon atoms in the main chains of the first perfluoropolymer and the second fluoropolymer.

The fluorinated particle 3 was found to have less than 10 functional groups, per $10^6$ carbon atoms in the main chain of the fluorine-containing polymer having the TFE unit and the M1 unit.

All the fluorinated particles were not found to foam under heating, thus proving excellence in heat resistance.

From the above, Case 1 was found to be successful to obtain the fluorine-containing copolymer having excellent heat resistance equivalent to that in Case 3, with no use of the fluorine-containing emulsifier.

Case 2 failed in obtaining the fluorine-containing polymer, with no use of the fluorine-containing emulsifier.

The composition of the present disclosure is obtainable with no use of the fluorine-containing emulsifier, and is very useful in scenes where use of the fluorine-containing emulsifier is limited.

The disclosures of Japanese Patent Application No. 2023-129557 filed on August 8, 2023, and Japanese Patent Application No. 2024-099100 filed on June 19, 2024, are incorporated herein by reference in their entirety. All documents, patent applications, and technical standards described in this specification are incorporated herein by reference, to the same extent as if each document, patent application, and technical standard were specifically and individually described to be incorporated by reference.

Claims

1.  A composition comprising:

a first perfluoropolymer having a glass transition temperature of 10°C or lower; and
a second fluoropolymer that contains tetrafluoroethylene and a constitutional unit ascribed to a compound represented by Formula (1) below, and that is different from the first perfluoropolymer,

a content of a perfluoro(alkyl vinyl ether)-based constitutional unit, with respect to a total content of all constitutional units of the first perfluoropolymer and the second fluoropolymer, being from 0.05 to 5.0 mol%:

$$CF_2 = CF - CF_2 - O - Rf... \qquad (1),$$

wherein, in Formula (1), Rf represents a perfluoroalkyl group having from 1 to 10 carbon atoms, and optionally having an etheric oxygen atom between carbon atoms in the perfluoroalkyl group.

2. The composition according to claim 1, wherein neither the first perfluoropolymer, nor the second fluoropolymer, contains any functional group, or a total number of functional groups per $10^6$ carbon atoms in main chains of the first perfluoropolymer and the second fluoropolymer is smaller than 100.

3. The composition according to claim 1 or 2, wherein the first perfluoropolymer contains a tetrafluoroethylene-based constitutional unit, and a perfluoro(alkyl vinyl ether)-based constitutional unit.

4. The composition according to claim 3, wherein, in the first perfluoropolymer, the perfluoro(alkyl vinyl ether)-based constitutional unit accounts for from 20 to 70 mol% of a total of the tetrafluoroethylene-based constitutional unit and the perfluoro(alkyl vinyl ether)-based constitutional unit.

5. A method of producing a fluorine-containing polymer, the method comprising:

preparing an aqueous dispersion A that contains a first perfluoropolymer having a glass transition temperature of 10°C or lower, and an aqueous medium; and
producing a second fluoropolymer different from the first perfluoropolymer, by polymerizing, in the aqueous dispersion A, a monomer that contains tetrafluoroethylene and a compound represented by Formula (1) below, before starting the polymerization of the monomer, a content of the first perfluoropolymer being from 0.01 to 4.0 mass% with respect to a total mass of the aqueous dispersion A, and
before starting the polymerization of the monomer, the aqueous dispersion A being free of a fluorine-containing emulsifier, or a content of the fluorine-containing emulsifier being 100 ppm by mass or less, with respect to the total mass of the aqueous dispersion A:

$$CF_2 = CF - CF_2 - O - Rf... \qquad (1),$$

wherein, in Formula (1), Rf represents a perfluoroalkyl group having from 1 to 10 carbon atoms, and optionally having an etheric oxygen atom between carbon atoms in the perfluoroalkyl group.

6. The method of producing a fluorine-containing polymer according to claim 5, wherein a usage amount of the monomer is from 1 to 50 parts by mass, per 100 parts by mass of a usage amount of the aqueous medium.

7. The method of producing a fluorine-containing polymer according to claim 5 or 6, wherein:

the step of preparing the aqueous dispersion A is a step of preparing the aqueous dispersion A, which contains a particle of the first perfluoropolymer, and the aqueous medium;
the step of producing the second fluoropolymer is a step of producing the second fluoropolymer different from the first perfluoropolymer, by polymerizing the monomer, thereby producing a particle that contains the first perfluoropolymer and the second fluoropolymer; and
a ratio of an average particle size of the particle that contains the first perfluoropolymer and the second fluoropolymer, with respect to an average particle size of the particle of the first perfluoropolymer, is 2 or larger.

8. The method of producing a fluorine-containing polymer according to claim 5 or 6, wherein the aqueous dispersion A has a viscosity of 2.0 mPa·s or smaller.

9. The method of producing a fluorine-containing polymer according to claim 5 or 6, wherein the aqueous dispersion A has a thixotropic ratio of from 0.9 to 1.2.

10. The method of producing a fluorine-containing polymer according to claim 5 or 6, wherein the monomer is polymerized in the presence of a polymerization initiator.

**11.** The method of producing a fluorine-containing polymer according to claim 5 or 6, further comprising subjecting the first perfluoropolymer and the second fluoropolymer to a fluorination treatment.

**12.** An aqueous dispersion comprising an aqueous medium and a melt-moldable particle,

the particle having an average particle size of 1 $\mu$m or smaller;
the particle containing one or more kinds of fluorine-containing polymer;
the fluorine-containing polymer containing a tetrafluoroethylene-based constitutional unit, a perfluoro(alkyl vinyl ether)-based constitutional unit, and a constitutional unit ascribed to a compound represented by Formula (1) below;
a content of the perfluoro(alkyl vinyl ether)-based constitutional unit being from 0.05 to 5.0 mol%, with respect to all constitutional units of the fluorine-containing polymer;
a content of the particle being from 1 to 50 mass% with respect to a total mass of the aqueous dispersion; and
the aqueous dispersion being free of a fluorine-containing emulsifier, or a content of the fluorine-containing emulsifier being 100 ppm by mass or less, with respect to a content of the fluorine-containing polymer:

$$CF_2 = CF - CF_2 - O - Rf... \qquad (1),$$

wherein, in Formula (1), Rf represents a perfluoroalkyl group having from 1 to 10 carbon atoms, and optionally having an etheric oxygen atom between carbon atoms in the perfluoroalkyl group.

**13.** The aqueous dispersion according to claim 12, wherein a viscosity is from 0.8 to 2.0 mPa·s.

**14.** A melt-moldable particle,

the particle having an average particle size of 1 $\mu$m or smaller;
the particle containing one or more kinds of fluorine-containing polymer;
the fluorine-containing polymer containing a tetrafluoroethylene-based constitutional unit, a perfluoro(alkyl vinyl ether)-based constitutional unit, and a constitutional unit ascribed to a compound represented by Formula (1) below;
a content of the perfluoro(alkyl vinyl ether)-based constitutional unit being from 0.05 to 5.0 mol%, with respect to all constitutional units of the fluorine-containing polymer;
the particle being free of a fluorine-containing emulsifier, or a content of the fluorine-containing emulsifier being 100 ppm by mass or less, with respect to a content of the fluorine-containing polymer; and
with respect to the fluorine-containing polymer, a content of a compound represented by Formula (S1) being from 1 to 10000 ppb by mass, and a content of a compound represented by Formula (S2) being 100 ppb by mass or less:

$$CF_2 = CF - CF_2 - O - Rf... \qquad (1),$$

Formula (S1): H - $(CF_2)_n$ - COOM, and

Formula (S2): H - $(CF_2)_m$ - SO$_3$M,

wherein, in Formula (S1) and Formula (S2), each M independently represents a hydrogen atom, Na, K, or NH$_4$, n represents from 7 to 11, and m represents from 8 to 12.

## INTERNATIONAL SEARCH REPORT

| | International application No. |
|---|---|
| | **PCT/JP2024/027600** |

### A. CLASSIFICATION OF SUBJECT MATTER

*C08L 27/18*(2006.01)i; *C08F 8/20*(2006.01)i; *C08F 214/26*(2006.01)i; *C08F 216/12*(2006.01)i; *C08F 216/14*(2006.01)i; *C08L 29/10*(2006.01)i
FI: C08L27/18; C08L29/10; C08F8/20; C08F214/26; C08F216/14; C08F216/12

According to International Patent Classification (IPC) or to both national classification and IPC

### B. FIELDS SEARCHED

Minimum documentation searched (classification system followed by classification symbols)

C08L1/00-101/14; C08K3/00-13/08; C08F6/00-246/00; 301/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-514015 A (3M INNOVATIVE PROPERTIES COMPANY) 03 June 2021 (2021-06-03) entire text | 1-14 |
| A | JP 2018-510235 A (3M INNOVATIVE PROPERTIES COMPANY) 12 April 2018 (2018-04-12) entire text | 1-14 |
| A | JP 2004-244504 A (UNIMATEC CO., LTD.) 02 September 2004 (2004-09-02) entire text | 1-14 |
| A | JP 2003-145608 A (DAIKIN INDUSTRIES, LTD.) 20 May 2003 (2003-05-20) entire text | 1-14 |
| A | JP 2002-194163 A (DAIKIN INDUSTRIES, LTD.) 10 July 2002 (2002-07-10) entire text | 1-14 |

☑ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 October 2024** | **15 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

International application No.

**PCT/JP2024/027600**

C. DOCUMENTS CONSIDERED TO BE RELEVANT

| Category* | Citation of document, with indication, where appropriate, of the relevant passages | Relevant to claim No. |
|---|---|---|
| A | WO 2016/170918 A1 (ASAHI GLASS COMPANY, LIMITED) 27 October 2016 (2016-10-27) entire text | 1-14 |
| A | WO 2019/004145 A1 (DAIKIN INDUSTRIES, LTD.) 03 January 2019 (2019-01-03) entire text | 1-14 |
| A | WO 2019/225694 A1 (DAIKIN INDUSTRIES, LTD.) 28 November 2019 (2019-11-28) entire text | 1-14 |

## INTERNATIONAL SEARCH REPORT
### Information on patent family members

International application No.

**PCT/JP2024/027600**

| Patent document cited in search report | | | Publication date (day/month/year) | Patent family member(s) | | | Publication date (day/month/year) |
|---|---|---|---|---|---|---|---|
| JP | 2021-514015 | A | 03 June 2021 | US | 2021/0155790 | A1 | |
| | | | | entire text | | | |
| | | | | WO | 2019/161153 | A1 | |
| | | | | EP | 3752567 | A1 | |
| | | | | EP | 3527634 | A1 | |
| | | | | CN | 111727227 | A | |
| JP | 2018-510235 | A | 12 April 2018 | US | 2018/0016375 | A1 | |
| | | | | entire text | | | |
| | | | | JP | 2018-505283 | A | |
| | | | | JP | 2019-85582 | A | |
| | | | | US | 2018/0030183 | A1 | |
| | | | | US | 2018/0057625 | A1 | |
| | | | | WO | 2016/130904 | A1 | |
| | | | | WO | 2016/130900 | A1 | |
| | | | | WO | 2016/130894 | A1 | |
| | | | | EP | 3256499 | A1 | |
| | | | | EP | 3256500 | A1 | |
| | | | | EP | 3256502 | A1 | |
| | | | | CN | 107207671 | A | |
| | | | | CN | 107223141 | A | |
| | | | | CN | 107406550 | A | |
| JP | 2004-244504 | A | 02 September 2004 | (Family: none) | | | |
| JP | 2003-145608 | A | 20 May 2003 | (Family: none) | | | |
| JP | 2002-194163 | A | 10 July 2002 | (Family: none) | | | |
| WO | 2016/170918 | A1 | 27 October 2016 | US | 2018/0037689 | A1 | |
| | | | | entire text | | | |
| | | | | EP | 3287474 | A1 | |
| WO | 2019/004145 | A1 | 03 January 2019 | US | 2020/0123377 | A1 | |
| | | | | entire text | | | |
| | | | | EP | 3623427 | A1 | |
| | | | | CN | 110799593 | A | |
| | | | | TW | 201905081 | A | |
| WO | 2019/225694 | A1 | 28 November 2019 | US | 2021/0206970 | A1 | |
| | | | | entire text | | | |
| | | | | EP | 3789458 | A1 | |
| | | | | CN | 112189034 | A | |
| | | | | KR | 10-2021-0010558 | A | |
| | | | | TW | 202003699 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007046377 A
- WO 2021045227 A
- WO 2018181904 A
- JP 2016537499 A
- US 6841616 B, Wille
- US 7977438 B, Brothers
- JP 2023129557 A
- JP 2024099100 A